# EUROPEAN PATENT SPECIFICATION

(11) **EP 4 040 284 B1**
(45) Date of publication and mention of the grant of the patent: **28.01.2026**
(21) Application number: 20880523.4
(22) Date of filing: 27.10.2020
(51) Int. Cl.: G06F 3/16, G06F 1/16, G06F 3/01, H04M 1/02, H04M 1/72454, H04R 5/02, H04R 5/04, H04M 1/60, H04S 7/00

(54) **SOUND PROCESSING METHOD AND APPARATUS THEREOF**
TONVERARBEITUNGSVERFAHREN UND -VORRICHTUNG DAFÜR
PROCÉDÉ DE TRAITEMENT DE SON ET APPAREIL ASSOCIÉ

(30) Priority: 30.10.2019 CN 201911048950
(43) Date of publication of application: 10.08.2022
(73) Proprietor: Huawei Technologies Co., Ltd., Shenzhen, Guangdong 518129 (CN)
(72) Inventor: LIU, Shitao, Shenzhen, Guangdong 518129 (CN)
(74) Representative: Thun, Clemens
(86) International application number: PCT/CN2020/123924
(87) International publication number: WO 2021/083128

(56) References cited:
- CN-A- 106 997 283
- CN-A- 110 989 961
- US-A1- 2014 179 380
- US-A1- 2014 179 380
- US-A1- 2018 329 672

## Description

### TECHNICAL FIELD

This application relates to the field of terminal technologies, and in particular, to a sound processing method and apparatus.

### BACKGROUND

A sound effect is an effect created by sound, and means noise or sound added to a sound track for an enhancement to the atmosphere, fidelity, or theatricality of a scene.

Currently, sound effect parameters included in a terminal are a set of fixed parameters that are dedicated to optimization of the terminal. For example, a set of fixed sound effect parameters is set based on one or more of a size of the terminal, a location of a speaker in the terminal, and a location of a microphone in the terminal. A sound effect implemented by using the sound effect parameters cannot meet requirements in different application scenarios. Therefore, how to enrich sound effects of a terminal to meet requirements in different application scenarios becomes an urgent technical problem to be resolved.
The document US 2014/0179380 A1 shows a method and apparatus for controlling an audio signal in a portable terminal. Especially, an adaptation of the audio signal based upon a folding or bending angle of the display is shown. The document US 2018/0329672 Al shows an automatic volume adjustment on hinged multi-screen devices. Also here, an adjustment of the audio signal based upon a folding angle is shown.

### SUMMARY

The present invention is defined by the independent claims. Further advantageous developments are shown by the dependent claims.

### BRIEF DESCRIPTION OF DRAWINGS

FIG. 1a-1 and FIG. 1a-2 are a schematic diagram of a scenario in which a screen display parameter of a terminal device meets a sound adjustment condition according to an embodiment of this application;
FIG. 1b is a schematic diagram of a structure of a terminal device according to an embodiment of this application;
FIG. 1c is a schematic diagram of a software system of a terminal device according to an embodiment of this application;
FIG. 2 is a schematic flowchart of a sound processing method according to an embodiment of this application;
FIG. 3a is a schematic flowchart of another sound processing method according to an embodiment of this application;
FIG. 3b is a schematic diagram of a scenario of folding a terminal device according to an embodiment of this application;
FIG. 3c is a schematic diagram of a sound field generated when a terminal device plays a video in stereo according to an embodiment of this application;
FIG. 3d is another schematic diagram of a sound field generated when a terminal device plays a video in stereo according to an embodiment of this application;
FIG. 4a is a schematic flowchart of still another sound processing method according to an embodiment of this application;
FIG. 4b is a diagram of a correspondence between a screen and a sound input/output device group in a terminal device according to an embodiment of this application;
FIG. 4c is a schematic diagram of usage of a sound input/output device group in a terminal device according to an embodiment of this application;
FIG. 4d is a schematic diagram of a terminal device obtained after a folding angle between a first screen and a second screen in FIG. 4c changes to 0° according to an embodiment of this application;
FIG. 5 is a schematic diagram of a structure of a sound processing apparatus according to an embodiment of this application; and
FIG. 6 is a schematic diagram of a structure of another sound processing apparatus according to an

### DESCRIPTION OF EMBODIMENTS

To better understand a sound processing method disclosed in embodiments of this application, the following first describes an application scenario to which embodiments of this application are applicable.

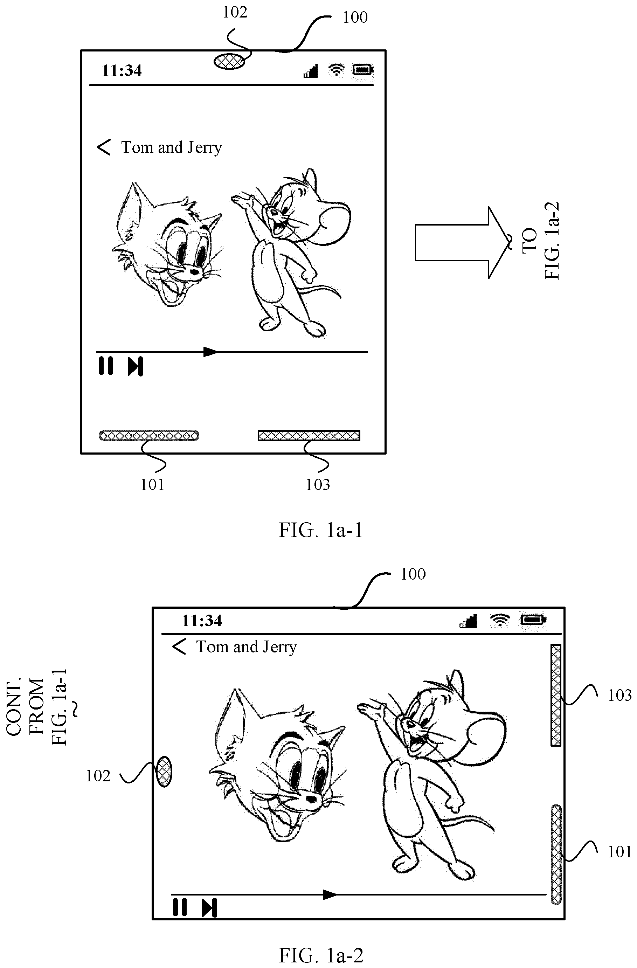

FIG. 1a-1 and FIG. 1a-2 are a schematic diagram of a scenario in which a screen display parameter of a terminal device meets a sound adjustment condition according to an embodiment of this application. The terminal device may include a plurality of sound configuration parameter groups, and the terminal device may further include one or more sound input/output device groups. In FIG. 1a-1 and FIG. 1a-2, an example in which the terminal device includes one sound input/output device group is used for description. Each sound configuration parameter group may be used to configure a corresponding sound input/output device group, so that a sound effect played by the sound input/output device group or a sound effect collected by the sound input/output device group meets a user requirement. It should be noted that one sound input/output device group may correspond to a plurality of sound configuration parameter groups.

The sound configuration parameter group may include but is not limited to one or more of a parameter of a smart power amplifier (smart power amplifier, SPA), a boost parameter (boost parameter), a parameter of a digital theater system (digital theater system, DTS) algorithm, or a parameter of a Dolby sound effect algorithm. DTS is a high-quality multi-audio surround sound technology used for movies and music. A Dolby sound effect (Dolby Audio) technology is a series of surround sound technologies used to provide rich, clear, and impressive sound effects for theaters, homes, and journeys. The parameter of the Dolby sound effect algorithm may include but is not limited to one or more of a related parameter for implementing noise reduction, a related parameter for implementing equalization, a related parameter for implementing directional surround, or a related parameter for implementing panoramic sound.

The sound input/output device group includes a sound input device and a sound output device. One sound input/output device group may include one or more sound input devices, and one sound input/output device group may include one or more sound output devices. The sound input device may include a microphone, and the sound output device may include a speaker. The speaker may include a horn or an earpiece. It should be noted that the sound configuration parameter group may include a parameter used to configure each device in the sound input/output device group. For example, the sound configuration parameter group may include a sound configuration parameter 1, a sound configuration parameter 2, and a sound configuration parameter 3. The sound configuration parameter 1 may be used to configure the horn, the sound configuration parameter 2 may be used to configure the earpiece, and the sound configuration parameter 3 may be used to configure the microphone.

In this embodiment of this application, the terminal device may detect whether the screen display parameter of the terminal device meets the sound adjustment condition; when detecting that the screen display parameter of the terminal device meets the sound adjustment condition, obtain a current screen display parameter; then determine a first sound configuration parameter group from a plurality of sound configuration parameter groups in the terminal device based on the current screen display parameter; and update a second sound configuration parameter group to the first sound configuration parameter group. The second sound configuration parameter group is a sound configuration parameter group currently enabled by the terminal device.

The screen display parameter of the terminal device may include a screen mode, and the screen mode may be a portrait mode or a landscape mode. That the screen display parameter of the terminal device meets the sound adjustment condition may indicate that a sound effect obtained after the sound input/output device group is configured by using the sound configuration parameter group currently enabled by the terminal device does not match a current application scenario, in other words, a currently played sound effect or collected sound effect is not an optimal sound effect. Consequently, a user cannot obtain optimal listening experience. Therefore, the terminal device may determine the first sound configuration parameter group from the plurality of sound configuration parameter groups in the terminal device based on the current screen display parameter, and a sound effect obtained after the terminal device enables the first sound configuration parameter group to configure the sound input/output device group may better match the current application scenario. This manner can flexibly adjust a sound effect, improve intelligence and flexibility of the terminal device, and also improve listening experience of the user. When the screen mode of the terminal device changes, the screen display parameter of the terminal device may meet the sound adjustment condition. For example, the screen mode of the terminal device changes from the landscape mode to the portrait mode, or the screen mode of the terminal device changes from the portrait mode to the landscape mode. The current screen display parameter may include a screen mode used after the screen mode of the terminal device changes.

As shown in FIG. 1a-1 and FIG. 1a-2, when the screen mode of the terminal device 100 changes from the portrait mode in FIG. 1a-1 to the landscape mode in FIG. 1a-2, the screen display parameter of the terminal device 100 meets the sound adjustment condition. The terminal device 100 in FIG. 1a-1 and FIG. 1a-2 (FIG. 1a-1 and FIG. 1a-2) includes one sound input/output device group (not shown in the figure), and the sound input/output device group includes a horn 101, an earpiece 102, and a microphone 103. A screen of the terminal device 100 further includes a time icon, a communications signal icon, a wireless local area network (wireless local area network, WLAN) (for example, wireless fidelity (wireless fidelity, Wi-Fi) network connection status icon), a battery icon, and a back icon, a play progress icon, a pause icon, a next-video play control icon, and the like that are displayed when a video is played.

It can be learned from FIG. 1a-1 that the terminal device 100 plays a video Tom and Jerry in the portrait mode. It can be learned from FIG. 1a-2 that the terminal device 100 plays the video in the landscape mode. It may be understood that, when the terminal device is in the landscape mode, it may be considered that a requirement of the user on a sound effect of the terminal device is higher than a requirement of the user on a sound effect of the terminal device in the portrait mode. Therefore, when the terminal device is in the landscape mode, a sound configuration parameter group that implements a better sound effect is used to enhance immersion of the user in the landscape mode. For example, if the terminal device 100 includes a sound configuration parameter group 1 and a sound configuration parameter group 2, and a sound effect correspondingly generated by using the sound configuration parameter group 1 is poorer than a sound effect correspondingly generated by using the sound configuration parameter group 2. If the screen mode of the terminal device 100 is the landscape mode currently, the terminal device 100 may use the sound configuration parameter group 2 as the first sound configuration parameter group. If the screen mode of the terminal device 100 is the portrait mode currently, the terminal device 100 may use the sound configuration parameter group 1 as the first sound configuration parameter group. It may be considered that the requirement of the user on the sound effect of the terminal device in the portrait mode is lower than the requirement of the user on the sound effect of the terminal device in the landscape mode. Therefore, when the sound configuration parameter group 1 that implements an ordinary sound effect is used, the user almost does not feel a decrease in hearing, and resource consumption of the terminal device can be reduced by using the sound configuration parameter group 1 that implements an ordinary sound effect.

It should be noted that, that the terminal device 100 includes one sound input/output device group in FIG. 1a-1 and FIG. 1a-2 is merely used as an example, and does not constitute a limitation on this embodiment of this application. In another feasible implementation, the terminal device 100 may further include a plurality of sound input/output device groups. In FIG. 1a-1 and FIG. 1a-2, that one sound input/output device group includes one horn 101, one earpiece 102, and one microphone 103 is merely used as an example, and does not constitute a limitation on this embodiment of this application. In another feasible implementation, the sound input/output device group may further include a secondary microphone. It should be further noted that locations of the horn 101, the earpiece 102, and the microphone 103 in the terminal device 100 in FIG. 1a-1 and FIG. 1a-2 are merely used as an example, and do not constitute a limitation on this embodiment of this application.

The terminal device 100 may be an artificial intelligence based terminal device. The terminal device 100 may also be referred to as a terminal (terminal), user equipment (user equipment, UE), a mobile station (mobile station, MS), a mobile terminal (mobile terminal, MT), or the like. The terminal device may be a mobile phone (mobile phone), a smart TV, a wearable device, a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form used by the terminal device are not limited in embodiments of this application.

Artificial intelligence (artificial intelligence, AI) is new technical science that studies and develops theories, methods, techniques, and application systems for simulating, extending, and expanding human intelligence. A core of AI is using a machine learning technology to allow a machine to simulate core aspects of human behavior. In other words, AI allows the machine to behave as an autonomous system that can perform sensing, learn, make a decision, and take action with little or without human intervention.

It may be understood that a network architecture described in embodiments of this application is intended to describe the technical solutions in embodiments of this application more clearly, but does not constitute a limitation on the technical solutions provided in embodiments of this application. A person of ordinary skill in the art may learn that, with evolution of a system architecture and emergence of a new service scenario, the technical solutions provided in embodiments of this application are also applicable to a similar technical problem.

To better understand embodiments of this application, the following describes a structure of the terminal device in embodiments of this application.

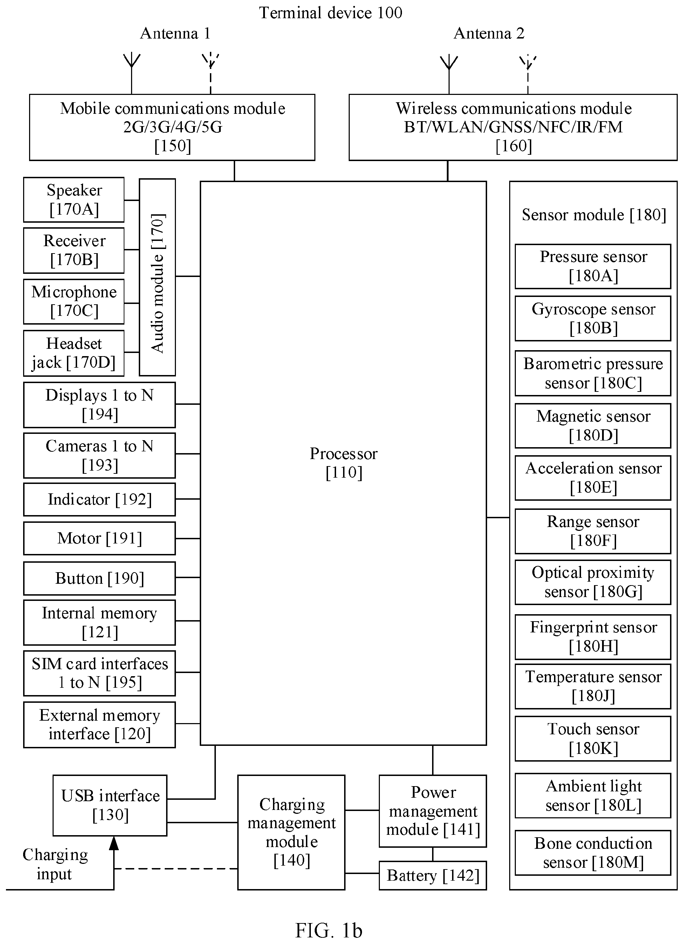

FIG. 1b is a schematic diagram of a structure of the terminal device 100. The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a range sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the terminal device 100. In some other embodiments of this application, the terminal device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processing unit (neural network processing unit, NPU). Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, 12C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communications module 160 through the I2S interface, to implement a function of answering a call by using a Bluetooth headset.

The PCM interface may also be used for audio communication, and analog signal sampling, quantization, and coding. In some embodiments, the audio module 170 may be coupled to the wireless communications module 160 through a PCM bus interface. In some embodiments, the audio module 170 may alternatively transfer an audio signal to the wireless communications module 160 through the PCM interface, to implement a function of answering a call by using a Bluetooth headset. Both the I2S interface and the PCM interface may be used for audio communication.

The UART interface is a universal serial data bus, and is used for asynchronous communication. The bus may be a two-way communications bus. The bus converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transfer an audio signal to the wireless communications module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the terminal device 100. The processor 110 communicates with the display 194 through the DSI interface, to implement a display function of the terminal device 100.

The GPIO interface may be configured by using software. The GPIO interface may be configured as a control signal or a data signal. In some embodiments, the GPIO interface may be configured to connect the processor 110 to the camera 193, the display 194, the wireless communications module 160, the audio module 170, the sensor module 180, or the like. The GPIO interface may alternatively be configured as an I2C interface, an I2S interface, a UART interface, an MIPI interface, or the like.

The USB interface 130 is an interface that conforms to USB standard specifications, and may be specifically a mini USB interface, a micro USB interface, a USB Type-C interface, or the like. The USB interface 130 may be configured to connect to a charger to charge the terminal device 100, or may be configured to transmit data between the terminal device 100 and a peripheral device, or may be configured to connect to a headset for playing audio through the headset, or may be configured to connect to another electronic device such as an AR device

It can be understood that an interface connection relationship between the modules illustrated in this embodiment of this application is merely an example for description, and does not constitute a limitation on the structure of the terminal device 100. In some other embodiments of this application, the terminal device 100 may alternatively use an interface connection manner that is different from that in the foregoing embodiment, or a combination of a plurality of interface connection manners.

The charging management module 140 is configured to receive a charging input from the charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input by using a wireless charging coil of the terminal device 100. The charging management module 140 may further supply power to the terminal device by using the power management module 141 while charging the battery 142.

The power management module 141 is configured to connect the battery 142 and the charging management module 140 to the processor 110. The power management module 141 receives an input from the battery 142 and/or the charging management module 140, and supplies power to the processor 110, the internal memory 121, the display 194, the camera 193, the wireless communications module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal device 100 may be implemented through the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the terminal device 100 may be configured to cover one or more communication frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communications module 150 can provide a solution, applied to the terminal device 100, to wireless communication including 2G, 3G, 4G, 5G, and the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transmit a processed electromagnetic wave to a modem processor for demodulation. The mobile communications module 150 may further amplify a signal modulated by the modem processor, and convert the signal into an electromagnetic wave for radiation through the antenna 1. In some embodiments, at least some function modules of the mobile communications module 150 may be disposed in the processor 110. In some embodiments, at least some function modules of the mobile communications module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transmits an obtained signal to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communications module 150 or another function module

The wireless communications module 160 may provide a solution, applied to the terminal device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communications module 160 may be one or more components integrating at least one communications processing module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave for radiation through the antenna 2.

In some embodiments, in the terminal device 100, the antenna 1 is coupled to the mobile communications module 150, and the antenna 2 is coupled to the wireless communications module 160, so that the terminal device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution. LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini LED, a micro LED, a micro OLED, a quantum dot light emitting diode (quantum dot light emitting diode, QLED), or the like. In some embodiments, the terminal device 100 may include one or N displays 194, where N is a positive integer greater than 1.

The terminal device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. The photosensitive element of the camera converts an optical signal into an electrical signal, and transmits the electrical signal to the ISP for processing. The ISP converts the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in an RGB format, a YUV format, or the like. In some embodiments, the terminal device 100 may include one or N cameras 193, where N is a positive integer greater than 1.

The digital signal processor is configured to process a digital signal, and may further process another digital signal in addition to the digital image signal. For example, when the terminal device 100 selects a frequency, the digital signal processor is configured to perform Fourier transform and the like on frequency energy.

The video codec is configured to compress or decompress a digital video. The terminal device 100 may support one or more video codecs. Therefore, the terminal device 100 may play or record videos in a plurality of coding formats, for example, moving picture experts group (moving picture experts group, MPEG)-1, MPEG-2, MPEG-3, and MPEG-4.

The NPU is a neural network (neural network, NN) computing processor, quickly processes input information by referring to a structure of a biological neural network, for example, by referring to a mode of transmission between human brain neurons, and may further continuously perform self-learning. The terminal device 100 may implement applications such as intelligent cognition through the NPU, for example, image recognition, facial recognition, speech recognition, and text understanding.

The external memory interface 120 may be configured to connect to an external memory card such as a micro SD card, to extend a storage capability of the terminal device 100. The external storage card communicates with the processor 110 through the external memory interface 120, to implement a data storage function. For example, files such as music and a video are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, a sound playing function and an image playing function), and the like. The data storage area may store data created when the terminal device 100 is used (for example, audio data or a phone book), and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121 and/or the instructions stored in the memory disposed in the processor, to perform various function applications of the terminal device 100 and data processing.

The terminal device 100 may implement audio functions such as music playing and recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some function modules of the audio module 170 are disposed in the processor 110.

The speaker 170A, also referred to as a "horn", is configured to convert an audio electrical signal into a sound signal. The terminal device 100 may listen to music or answer a hands-free call through the speaker 170A.

The receiver 170B, also referred to as an "earpiece", is configured to convert an audio electrical signal into a sound signal. When the terminal device 100 answers a call or listens to a voice message, the receiver 170B may be placed near a human ear to listen to a voice.

The microphone 170C, also referred to as a "mike" or a "microphone", is configured to convert a sound signal into an electrical signal. When making a call or sending a voice message, the user may make a sound near the microphone 170C through the mouth, to enter a sound signal to the microphone 170C. At least one microphone 170C may be disposed in the terminal device 100. In some other embodiments, two microphones 170C may be disposed in the terminal device 100, to implement a noise reduction function in addition to a function of collecting a sound signal. In some other embodiments, three, four, or more microphones 170C may be alternatively disposed in the terminal device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal device 100 determines strength of the force based on a change of the capacitance. When a touch operation is performed on the display 194, the terminal device 100 detects strength of the touch operation based on the pressure sensor 180A. The terminal device 100 may also calculate a touch location based on a detection signal of the pressure sensor 180A. In some embodiments, touch operations that are performed at a same touch location but have different touch operation strength may correspond to different operation instructions. For example, when a touch operation whose touch operation strength is less than a first pressure threshold is performed on a Messages icon, an instruction for viewing an SMS message is executed. When a touch operation whose touch operation strength is greater than or equal to the first pressure threshold is performed on the Messages icon, an instruction for creating an SMS message is executed.

The gyroscope sensor 180B may be configured to determine a motion posture of the terminal device 100. In some embodiments, an angular velocity of the terminal device 100 around three axes (namely, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the terminal device 100 shakes, and calculates, based on the angle, a distance for which a lens module needs to compensate, so that the lens cancels the shake of the terminal device 100 through reverse motion, thereby implementing the image stabilization. The gyroscope sensor 180B may be further used in a navigation scenario and a motion-controlled gaming scenario.

The barometric pressure sensor 180C is configured to measure barometric pressure. In some embodiments, the terminal device 100 calculates an altitude by using a barometric pressure value measured by the barometric pressure sensor 180C, to assist in positioning and navigation.

The magnetic sensor 180D includes a Hall effect sensor. The terminal device 100 may detect opening and closing of a flip cover by using the magnetic sensor 180D. In some embodiments, when the terminal device 100 is a flip phone, the terminal device 100 can detect opening and closing of a flip cover based on the magnetic sensor 180D. Further, a feature such as automatic unlocking upon opening of the flip cover is set based on a detected opening or closing state of the flip cover.

The acceleration sensor 180E may detect a magnitude of an acceleration of the terminal device 100 in each direction (usually, on three axes). When the terminal device 100 is still, a magnitude and a direction of gravity may be detected. The acceleration sensor may be further configured to identify a posture of the terminal device, and is used in an application such as switching between a landscape mode and a portrait mode or a pedometer.

The range sensor 180F is configured to measure a distance. The terminal device 100 may measure a distance in an infrared or a laser manner. In some embodiments, in a photographing scenario, the terminal device 100 may measure a distance by using the range sensor 180F, to implement quick focusing.

The optical proximity sensor 180G may include, for example, a light-emitting diode (LED) and an optical detector such as a photodiode. The light-emitting diode may be an infrared light-emitting diode. The terminal device 100 emits infrared light by using the light-emitting diode. The terminal device 100 detects infrared reflected light from a nearby object by using the photodiode. When sufficient reflected light is detected, the terminal device 100 may determine that there is an object near the terminal device. When insufficient reflected light is detected, the terminal device 100 may determine that there is no object near the terminal device 100. The terminal device 100 may detect, through the optical proximity sensor 180G, that the user holds the terminal device 100 close to an ear to make a call, to automatically perform screen-off for power saving. The optical proximity sensor 180G may also be used in a smart cover mode or a pocket mode to automatically perform screen unlocking or locking.

The ambient light sensor 180L is configured to sense ambient light brightness. The terminal device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the terminal device 100 is in a pocket, to prevent an accidental touch.

The fingerprint sensor 180H is configured to collect a fingerprint. The terminal device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal device 100 executes a temperature processing policy based on the temperature detected by the temperature sensor 180J. For example, when the temperature reported by the temperature sensor 180J exceeds a threshold, the terminal device 100 degrades performance of a processor near the temperature sensor 180J, to reduce power consumption and implement thermal protection. In some other embodiments, when the temperature is less than another threshold, the terminal device 100 heats the battery 142 to prevent the terminal device 100 from being shut down abnormally because of a low temperature. In some other embodiments, when the temperature is less than still another threshold, the terminal device 100 boosts an output voltage of the battery 142 to avoid abnormal shutdown caused by a low temperature.

The touch sensor 180K is also referred to as a "touch component". The touch sensor 180K may be disposed on the display 194. The touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor, to determine a type of a touch event. A visual output related to the touch operation may be provided through the display 194. In some other embodiments, the touch sensor 180K may alternatively be disposed on a surface of the terminal device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal. In some embodiments, the bone conduction sensor 180M may alternatively be disposed in the headset, to constitute a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal device 100 may receive a key input, and generate a key signal input related to user settings and function control of the terminal device 100.

The motor 191 may generate a vibration prompt. The motor 191 may be configured to produce an incoming call vibration prompt and a touch vibration feedback. For example, touch operations performed on different applications (for example, photographing and audio playing) may correspond to different vibration feedback effects. For touch operations performed on different areas of the display 194, the motor 191 may also correspond to different vibration feedback effects. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the terminal device 100. The terminal device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type, or may be of different types. The SIM card interface 195 is compatible with different types of SIM cards. The SIM card interface 195 is also compatible with an external storage card. The terminal device 100 interacts with a network by using the SIM card, to implement functions such as a call function, a data communication function, and the like. In some embodiments, the terminal device 100 uses an eSIM, that is, an embedded SIM card. The eSIM card may be embedded in the terminal device 100, and cannot be separated from the terminal device 100.

A software system of the terminal device 100 may use a layered architecture, an event-driven architecture, a microkernel architecture, a micro service architecture, or a cloud architecture. In an embodiment of this application, an Android system with a layered architecture is used as an example to describe a software structure of the terminal device 100.

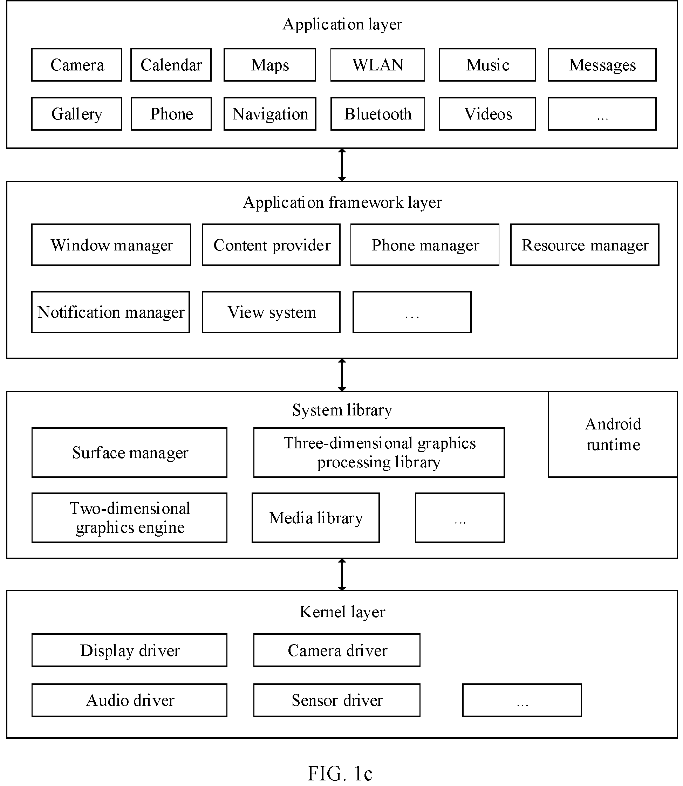

FIG. 1c is a block diagram of the software structure of the terminal device 100 according to an embodiment of this application.

In the layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 1c, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 1c, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and received, a browsing history and a bookmark, a phone book, and the like.

The view system includes visual controls, such as a control for displaying a text and a control for displaying a picture. The view system may be configured to construct an application. A display interface may include one or more views. For example, a display interface including a notification icon of Messages may include a text display view and a picture display view.

The phone manager is configured to provide a communication function of the terminal device 100, for example, management of a call status (including answering, declining, or the like).

The resource manager provides various resources for an application, such as a localized character string, an icon, a picture, a layout file, and a video file.

The notification manager enables an application to display notification information in a status bar, and may be configured to convey a notification type message. The displayed notification information may automatically disappear after a short pause without user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on a screen in a form of a dialog window. For example, text information is prompted in the status bar, an alert sound is played, the terminal device vibrates, or an indicator light blinks.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run on the virtual machine. The virtual machine executes Java files at the application layer and the application framework layer as binary files. The virtual machine is configured to perform functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working procedure of software and hardware of the terminal device 100 with reference to a photographing scenario.

When the touch sensor 180K receives a touch operation, a corresponding hardware interruption is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a single-tap operation and a control corresponding to the single-tap operation is a control of a camera application icon. A camera application invokes an interface at the application framework layer, so that the camera application is started. Then, the camera driver is started by invoking the kernel layer, and a static image or a video is captured by using the camera 193.

The following describes in detail a sound processing method and apparatus provided in this application with reference to the accompanying drawings.

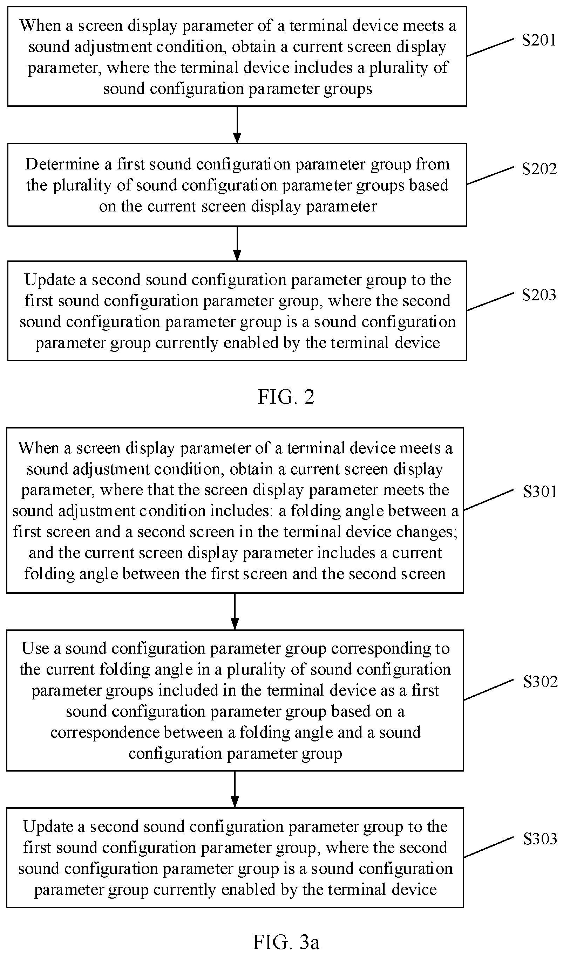

FIG. 2 is a schematic flowchart of a sound processing method according to an embodiment of this application. The method is applied to a terminal device including a plurality of sound configuration parameter groups. The sound processing method is executed by the terminal device or a chip in the terminal device. An example in which the sound processing method is executed by the terminal device is used below for description. As shown in FIG. 2, the method may include but is not limited to the following steps.

Step S201: When a screen display parameter of the terminal device meets a sound adjustment condition, the terminal device obtains a current screen display parameter.

In this embodiment of this application, the terminal device may detect, in real time, periodically, or aperiodically, whether the screen display parameter of the terminal device meets the sound adjustment condition; and when detecting that the screen display parameter of the terminal device meets the sound adjustment condition, obtain the current screen display parameter.

That the screen display parameter of the terminal device meets the sound adjustment condition may include: The screen display parameter of the terminal device changes, in other words, a historical screen display parameter of the terminal device is different from the current screen display parameter of the terminal device. That the screen display parameter of the terminal device meets the sound adjustment condition may indicate that a sound effect obtained after a sound input/output device group in the terminal device is configured by using a sound configuration parameter group currently enabled by the terminal device does not match a current application scenario, in other words, the terminal device may switch the sound configuration parameter group currently enabled by the terminal device, to adjust a sound effect of the terminal device. In other words, if the screen display parameter of the terminal device meets the sound adjustment condition, it indicates that the sound configuration parameter group currently enabled by the terminal device needs to be switched.

Specifically, the screen display parameter may include a screen mode. When the screen mode of the terminal device changes, the screen display parameter of the terminal device may meet the sound adjustment condition. In an implementation, when the screen mode of the terminal device changes in a process in which the terminal device runs an audio type application, the screen display parameter of the terminal device may meet the sound adjustment condition. The audio type application may be an application having a sound collection function and/or a sound playback function, or the audio type application may be an application whose main function is a sound function (for example, a call application), or the audio type application may be an application having a relatively high sound requirement (for example, a video player or a music player). A non-audio type application may have neither a sound collection function nor a sound playback function. In this manner, when the screen mode of the terminal device changes in a process in which the terminal device runs the non-audio type application, the terminal device may not need to switch the sound configuration parameter group currently enabled by the terminal device. In the process of running the non-audio type application, the terminal device needs to output sound that does not need a relatively high sound effect, such as a message prompt tone or a phone ring tone, and does not need to output other sound that needs a relatively high sound effect. Therefore, in this case, the sound configuration parameter group currently enabled by the terminal device is not switched. This avoids a resource waste.

In an implementation, the terminal device may set a sound adjustment condition by default, or a user may customize a sound adjustment condition or change a set sound adjustment condition. In an implementation, the user may set the sound adjustment condition in the terminal device according to a user requirement (for example, a usage habit), in other words, the user may customize some cases in which a sound configuration parameter group enabled by the terminal device may be switched.

In an implementation, the artificial intelligence based terminal device may determine the screen display parameter and the sound adjustment condition based on historical operation information of the user on the terminal device. For example, if the historical operation information indicates that the screen mode of the terminal device changes, the user enters a preset operation on the terminal device to switch the sound configuration parameter group enabled by the terminal device. Based on the historical operation information, it may be understood that, when the screen mode of the terminal device changes, the user expects to change the sound configuration parameter group enabled by the terminal device. Based on this, that the artificial intelligence based terminal device can automatically set the screen display parameter of the terminal device to meet the sound adjustment condition includes: The screen mode of the terminal device changes. This manner can enable the set sound adjustment condition to better match the user requirement, and prevent the user from manually switching the sound configuration parameter group enabled by the terminal device, in other words, can more flexibly switch the sound configuration parameter group enabled by the terminal device, more quickly switch the sound configuration parameter group, and improve intelligence and flexibility of the terminal device.

It should be noted that the historical operation information may be stored in a cloud, or may be stored in the terminal device. By recording the historical operation information of the user, the terminal device may learn of a habit of using the terminal device by the user, and does not need to frequently invoke data stored in the cloud. In this way, the terminal device may also determine the usage habit of the user when the terminal device does not use a network. It should be further noted that the terminal device may determine sound adjustment conditions for different users based on historical operation information of the different users. In this way, when different users use the terminal device, whether to switch the sound configuration parameter group enabled by the terminal device may be determined by using corresponding sound adjustment conditions. For example, when two users have different habits of using the terminal device, if the screen mode of the terminal device changes, and if a first user currently uses the terminal device, the terminal device may switch the sound configuration parameter group enabled by the terminal device; or if a second user currently uses the terminal device, the terminal device may not switch the sound configuration parameter group enabled by the terminal device. In this manner, intelligence and flexibility of the terminal device can be improved, so that the terminal device can better match usage habits of different users, and different users can obtain good use experience when using the terminal device.

In an implementation, the screen display parameter may include a play mode of the audio type application running on the terminal device. For example, when the audio type application is a video application a, a play mode of the video application a may be a full-screen play mode or a non-full-screen play mode. When the play mode is the full-screen play mode, content played by the video application a may occupy or almost occupy the entire screen (a small part of the screen may be used to display some system icons and application icons). As shown in FIG. 1a-2, it should be noted that, even if the terminal device is in a portrait mode, if the video application a running on the terminal device is in the full-screen play mode, the content of the video application a may also occupy the entire screen. When the play mode is the non-full-screen play mode, the content played by the video application a occupies a part of the screen. As shown in FIG. 1a-1, that the screen display parameter of the terminal device meets the sound adjustment condition may include: The play mode of the audio type application (a video application for playing Tom and Jerry) running on the terminal device changes. For example, the play mode of the audio type application changes from the full-screen play mode to the non-full-screen play mode, or the play mode of the audio type application changes from the non-full-screen play mode to the full-screen play mode.

In this embodiment of this application, the terminal device may obtain the current screen display parameter, and determine, based on the current screen display parameter, a first sound configuration parameter group from the plurality of sound configuration parameter groups included in the terminal device. Specifically, the current screen display parameter may include a current screen mode of the terminal device. For example, inFIG. 1a-1 and FIG. 1a-2, a screen mode (portrait mode) of the terminal device 100 in FIG. 1a-1 is a historical screen mode of the terminal device, and a screen mode (landscape mode) of the terminal device 100 in FIG. 1a-2 is a current screen mode of the terminal device. Alternatively, the current screen display parameter may include a current play mode of the audio type application running on the terminal device.

It should be noted that an application running on the screen in this embodiment of this application indicates that the application runs on the terminal device, and data of the application is displayed on the screen of the terminal device.

Step S202: The terminal device determines the first sound configuration parameter group from the plurality of sound configuration parameter groups based on the current screen display parameter.

Specifically, the terminal device may use a sound configuration parameter group corresponding to the current screen display parameter in the plurality of sound configuration parameter groups as the first sound configuration parameter group based on a correspondence between a screen display parameter and a sound configuration parameter group.

In this embodiment of this application, the terminal device may set a plurality of types of screen display parameters, and separately set a correspondence between each type of screen display parameters and a sound configuration parameter group. For example, when the terminal device includes a sound configuration parameter group 1 and a sound configuration parameter group 2, and two types of screen display parameters that are set by the terminal device are the screen mode and the play mode of the audio type application running on the terminal device (for example, the play mode of the video application a), Table 1 and Table 2 respectively show correspondences that are set by the terminal device for the two types of screen display parameters.

**Table 1 Correspondence between a screen mode and a sound configuration parameter group**

| Screen mode | Sound configuration parameter group |
|---|---|
| Portrait mode | Sound configuration parameter group 1 |
| Landscape mode | Sound configuration parameter group 2 |

**Table 2 Correspondence between a play mode of the video application a and a sound configuration parameter group**

| Play mode of the video application a | Sound configuration parameter group |
|---|---|
| Non-full-screen play mode | Sound configuration parameter group 1 |
| Full-screen play mode | Sound configuration parameter group 2 |

It should be noted that, when the terminal device sets a plurality of types of screen display parameters (for example, the screen mode and the play mode of the video application a running on the terminal device) and detects that the screen mode of the terminal device changes (in other words, the screen display parameter of the terminal device meets the sound adjustment condition), the terminal device may obtain the current screen mode, and use the current screen mode as the current screen display parameter, so as to determine the first sound configuration parameter group based on the correspondence shown in Table 1. Likewise, if the terminal device detects that the play mode of the video application a running on the terminal device changes (in other words, the screen display parameter of the terminal device meets the sound adjustment condition), the terminal device may obtain a current play mode of the video application a, and use the current play mode of the video application a as the current screen display parameter, so as to determine the first sound configuration parameter group based on the correspondence shown in Table 2.

In this embodiment of this application, the terminal device may preset a correspondence between a screen display parameter and a sound configuration parameter group, or the terminal device may change the correspondence between a screen display parameter and a sound configuration parameter group based on a user operation.

Step S203: The terminal device updates a second sound configuration parameter group to the first sound configuration parameter group, where the second sound configuration parameter group is a sound configuration parameter group currently enabled by the terminal device.

The second sound configuration parameter group is a sound configuration parameter group enabled by the terminal device when the terminal device detects that the screen display parameter of the terminal device meets the sound adjustment condition. The first sound configuration parameter group may be a sound configuration parameter group enabled by the terminal device after the terminal device detects that the screen display parameter of the terminal device meets the sound adjustment condition. The terminal device is configured by using different sound configuration parameter groups, so that sound effects collected by the terminal device and/or sound effects played by the terminal device are different. Therefore, the terminal device can flexibly adjust a sound effect by switching an enabled sound configuration parameter group, so that the sound effect of the terminal device can better adapt to different application scenarios. This improves intelligence and flexibility of the terminal device, and improves user experience.

In this embodiment of this application, when detecting that the screen display parameter of the terminal device meets the sound adjustment condition, the terminal device obtains the current screen display parameter; then determines the first sound configuration parameter group from the plurality of sound configuration parameter groups in the terminal device based on the current screen display parameter; and updates the second sound configuration parameter group to the first sound configuration parameter group. The second sound configuration parameter group is a sound configuration parameter group currently enabled by the terminal device. By switching a sound configuration parameter group enabled by the terminal device, sound effects collected by the terminal device and/or sound effects played by the terminal device can be different. This can flexibly adjust a sound effect, and improve intelligence and flexibility of the terminal device.

FIG. 3a is a schematic flowchart of another sound processing method according to an embodiment of this application. The method is applied to a terminal device including a plurality of sound configuration parameter groups. The method describes in detail a case in which a screen display parameter meets a sound adjustment condition when the terminal device includes a foldable screen. The sound processing method is executed by the terminal device or a chip in the terminal device. An example in which the sound processing method is executed by the terminal device is used below for description. As shown in FIG. 3a, the method may include but is not limited to the following steps.

Step S301: When the screen display parameter of the terminal device meets the sound adjustment condition, the terminal device obtains a current screen display parameter, where the terminal device includes a first screen and a second screen; the screen display parameter includes a folding angle between the first screen and the second screen; that the screen display parameter meets the sound adjustment condition includes: the folding angle changes; and the current screen display parameter includes a current folding angle between the first screen and the second screen.

In this embodiment of this application, the terminal device includes the foldable screen, the foldable screen may include one or more screens, and the foldable screen may be presented as two or more screens after being folded. In this embodiment of this application, an example in which the foldable screen is presented as two screens (for example, the first screen and the second screen) after being folded is used for description.

The screen display parameter may include but is not limited to one or more of a screen mode, a play mode of an audio type application running on the terminal device, the folding angle between the first screen and the second screen, a first application identifier corresponding to content displayed on the first screen, a second application identifier corresponding to content displayed on the second screen, or an identifier of a screen on which a user focus is located.

For the screen mode and the play mode of the audio type application running on the terminal device, refer to the specific descriptions of step S201 in FIG. 2. Details are not described herein again. The folding angle between the first screen and the second screen may be any angle in [-180°, 180°]. The content displayed on the first screen may be content of a first application, and the identifier of the first application is the first application identifier. The content displayed on the second screen may be content of a second application, and the identifier of the second application is the second application identifier. The identifier of the screen on which the user focus is located is used to uniquely identify the screen on which the user focus is located. The screen on which the user focus is located may be a screen to which a user pays more attention currently. In an implementation, the terminal device may use a screen recently operated by the user as the screen on which the user focus is located; or the terminal device may determine, through a user eyeball, a screen currently viewed by the user, and use the screen currently viewed by the user as the screen on which the user focus is located. A manner of determining the screen on which the user focus is located is not limited in this embodiment of this application.

That the screen display parameter meets the sound adjustment condition includes one or more of the following cases: (1) The screen mode of the terminal device changes. (2) The screen mode of the terminal device changes in a process in which the terminal device runs the audio type application. (3) The play mode of the audio type application running on the terminal device changes. (4) The folding angle between the first screen and the second screen changes. (5) An application type corresponding to the first application identifier changes, and/or an application type corresponding to the second application identifier changes. (6) When the first application identifier is different from the second application identifier, and the application types corresponding to the first application identifier and the second application identifier each are an audio type, the identifier of the screen on which the user focus is located changes. For the first three cases, refer to the specific descriptions of step S201 in FIG. 2. Details are not described herein again.

For the fourth case, the folding angle between the first screen and the second screen changes. In an implementation, an enabled sound configuration parameter group may be switched provided that the folding angle between the first screen and the second screen changes. This can improve interest of the terminal device. In an implementation, when the folding angle between the first screen and the second screen changes, and a change amount of the folding angle is greater than a preset angle, the screen display parameter may meet the sound adjustment condition. That the change amount of the folding angle is greater than the preset angle can avoid a case in which the terminal device switches an enabled sound configuration parameter group because the folding angle between the first screen and the second screen changes due to collision of the terminal device or shaking of the foldable screen caused by another reason (in this case, the user does not want to adjust a sound effect of the terminal device, in other words, does not need to switch a sound configuration parameter group enabled by the terminal device), thereby avoiding a misoperation and resource consumption caused by the misoperation. The preset angle may be set by the terminal device by default; or the preset angle may be determined based on a user operation, and the preset angle may be changed based on the user operation. The preset angle may be 1°, 2°, or another relatively small angle value.

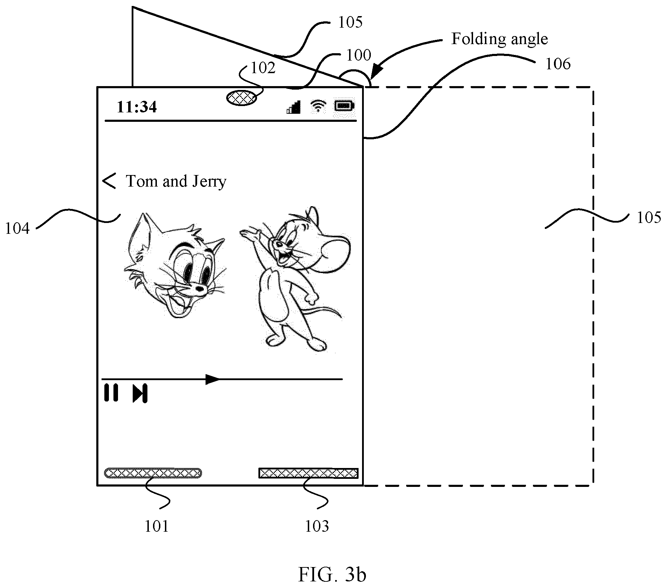

In an implementation, when a type of the folding angle between the first screen and the second screen changes, the screen display parameter may meet the sound adjustment condition. The type of the folding angle may be a first-type angle and a second-type angle. That the type of the folding angle changes may include: The folding angle changes from the first-type angle to the second-type angle, or the folding angle changes from the second-type angle to the first-type angle. The first-type angle may include 0°, and the second-type angle may include an angle other than 0°. In other words, when the terminal device is in a non-folded state, the type of the folding angle between the first screen and the second screen of the terminal device is the first-type angle; or when the terminal device is in a folded state, the type of the folding angle is the second-type angle. For example, FIG. 3b is a schematic diagram of a scenario of folding a terminal device 100. A folding angle between a first screen 104 and a second screen 105 may change by rotating a rotating shaft 106 in the terminal device 100. When the first screen 104 and the second screen 105 are synthesized into a complete screen (in other words, the first screen and the second screen are fully expanded), the folding angle is 0°. The folding angle may increase by rotating the screen backward. In an implementation, the folding angle may decrease by rotating the screen forward, and the folding angle is a negative number. When the type of the folding angle changes, the sound configuration parameter group enabled by the terminal device is switched, so as to save resources of the terminal device. For example, when the folding angle changes from 15° to 30°, the sound configuration parameter group enabled by the terminal device is not changed, so as to save resources.

When the terminal device includes a sound input/output device group, and locations of a horn, an earpiece, and a microphone in the sound input/output device group in the terminal device do not change, a sound effect that is input by or a sound effect that is output by using the sound input/output device group changes as the folding angle between the first screen and the second screen changes. The sound effect may include but is not limited to one or more of a stereo sound field location, a power (a rated output power, a music output power, or a peak music output power), a frequency range, and a frequency response. The rated output power is a maximum power that can be continuously output by a power amplifier circuit within a rated distortion range, and is also referred to as an effective power. The music output power is an instantaneous maximum output power of a power amplifier circuit when distortion does not exceed a specified range. The peak music output power is an instantaneous maximum output power of a power amplifier without considering distortion. The frequency range and the frequency response are two basic parameters that identify a sound reproduction capability of a sound box. The frequency range is a range between a minimum effective playback frequency and a maximum effective playback frequency of the sound box, and a unit is Hz (Hz). The frequency response is a phenomenon in which sound pressure generated by the sound box increases or decreases with a frequency change and a phase varies with a frequency when an audio signal that is output by a constant voltage is connected to the sound box system. The relationship between the sound pressure, the phase, and the frequency is referred to as the frequency response, and a unit is dB (dB).

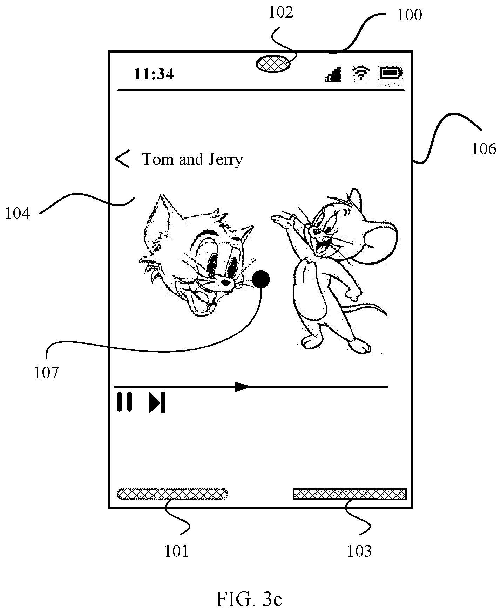

For example, FIG. 3c is a schematic diagram of a sound field generated when the terminal device plays a video in stereo. In FIG. 3c, the folding angle between the first screen 104 and the second screen (not shown in FIG. 3c) is 180°, and only the first screen 104 is in a working state in the terminal device 100. When a video Tom and Jerry is played on the first screen 104, a sound field 107 (a circle filled with black in FIG. 3c) generated when a horn 101 and an earpiece 102 perform stereo playing is located in a center of the first screen 104.

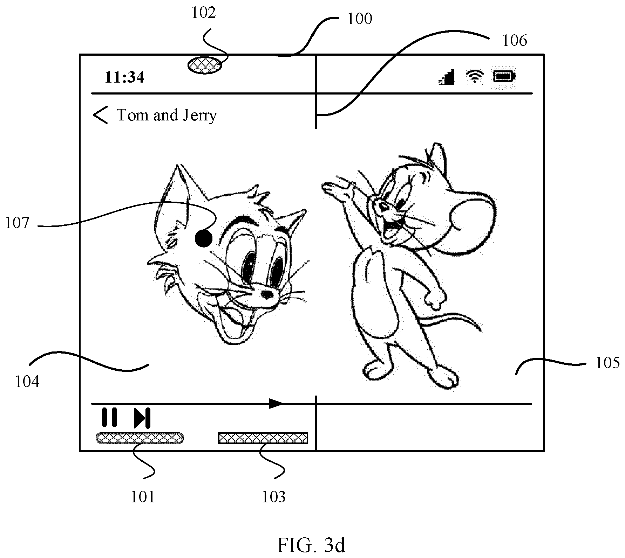

After the folding angle between the first screen and the second screen is 0° when the user rotates the second screen, the terminal device may play the video Tom and Jerry on a large screen formed by the first screen and the second screen. In this case, a schematic diagram of a sound field generated when the terminal device plays a video in stereo may be shown in FIG. 3d. It can be learned from FIG. 3d that, when locations of the horn 101 and the earpiece 102 are consistent with those in FIG. 3c, when a video is played on the large screen formed by the first screen 104 and the second screen 105, the sound field 107 generated when the horn 101 and the earpiece 102 perform stereo playing is still located in the center of the first screen 104. The user may feel that sound played in the video is emitted from a left side of the large screen (a quarter on the left side of the large screen) instead of a center of the large screen. Consequently, listening experience is relatively poor.

It should be noted that the terminal device may change a sound effect of the terminal device by changing an enabled sound configuration parameter group, or the terminal device may change a sound effect of the terminal device by changing locations of a horn, an earpiece, and a microphone in a sound input/output device group in the terminal device. In this embodiment of this application, an example in which the enabled sound configuration parameter group is changed to change the sound effect of the terminal device is used for description. To avoid relatively poor listening experience of the user in the schematic diagram of the scenario shown in FIG. 3d, the terminal device may switch the enabled sound configuration parameter group, so that the sound field generated when the terminal device plays the video in stereo in FIG. 3d is located in the center of the large screen. This manner can better match different application scenarios, and improve the sound effect of the terminal device.

It should be further noted that the terminal device shown in FIG. 3b includes one rotating shaft, and an example in which the rotating shaft is located in the middle of the terminal device is merely used for description. In another feasible implementation, the terminal device may include a plurality of rotating shafts, and the plurality of rotating shafts may be disposed at any location of the terminal device as required. Optionally, the terminal device may include an infinite quantity of rotating shafts, in other words, the screen of the terminal device may be folded at any location. It should be further noted that, that the first screen and the second screen shown in FIG. 3b have a same size is merely used as an example, and does not constitute a limitation on this embodiment of this application. In another feasible implementation, the first screen and the second screen may have different sizes. A size of a screen may be one or more of a length, a width, and an aspect ratio of the screen.

In an implementation, when the type of the folding angle between the first screen and the second screen changes, and the change amount of the folding angle is greater than the preset angle, the screen display parameter may meet the sound adjustment condition. This manner avoids a misoperation and resource consumption caused by the misoperation.

For the fifth case, the first application identifier is an identifier of an application running on the first screen. It should be noted that, when only a system-related icon is displayed on the first screen, it may be considered that a system application runs on the first screen. When the first screen is not in a working state (for example, displays no content), it may be considered that no application runs on the first screen. The second application identifier is similar. Details are not described herein again.

In an implementation, when the terminal device enables a single-screen function, a working screen is switched from the first screen to the second screen (in other words, the first application identifier changes from present to none), or a working screen is switched from the second screen to the first screen (in other words, the first application identifier changes from none to present), so that the screen display parameter of the terminal device can meet the sound adjustment condition. Before the terminal device disables the single-screen function, in any case, only one of the first screen and the second screen in the terminal device is in a working state. When the single-screen function is enabled, it is equivalent to that the terminal device does not include the foldable screen. For example, when the working screen is switched from the first screen to the second screen, and the sound input/output device group in the terminal device is configured on the first screen, if a video application runs on the second screen, a stereo sound field is located on the first screen, and consequently a sound effect of the terminal device is relatively poor. Therefore, when the working screen changes, the terminal device may switch the enabled sound configuration parameter group, so that the stereo sound field is located in a center of the current working screen by using a newly enabled sound configuration parameter group. This improves intelligence and flexibility of the terminal device.

In an implementation, that the application type corresponding to the first application identifier changes may include: The application type corresponding to the first application identifier changes from an audio type to a non-audio type, or the application type corresponding to the first application identifier changes from a non-audio type to an audio type.

When an application type of an application running on the terminal device is a non-audio type, the terminal device has a relatively low sound effect requirement because the terminal device needs to output only a call prompt tone, an SMS message prompt tone, and the like. When an application type of an application running on the terminal device is an audio type, the terminal device has a relatively high sound effect requirement. For example, when a movie is played, a relatively good sound effect is required to improve immersion of the user. It should be noted that, when a sound configuration parameter that implements a relatively good sound effect is used, resource consumption of the terminal device is relatively high; or when a sound configuration parameter that implements a relatively poor sound effect is used, resource consumption of the terminal device is relatively low. Therefore, when an application type of an application running on the first screen (that is, the application type corresponding to the first application identifier) changes from a non-audio type to an audio type, the terminal device may switch the enabled sound configuration parameter group, so that the sound effect of the terminal device is relatively good by using the newly enabled sound configuration parameter group. This improves user experience. When the application type corresponding to the first application identifier changes from an audio type to a non-audio type, the terminal device may switch the enabled sound configuration parameter group, so that the sound effect of the terminal device is appropriately weakened by using the newly enabled sound configuration parameter group. This saves resources.

A case in which the application type corresponding to the second application identifier changes is similar to a case in which the application type corresponding to the first application identifier changes. Details are not described herein again. It should be noted that a non-audio type application may be an application that has neither a sound collection function nor a sound playback function, or a non-audio type application may be an application to which the terminal device does not grant permission for a sound collection function and a sound playback function.

For the sixth case, when the first application identifier is different from the second application identifier, and the application types corresponding to the first application identifier and the second application identifier each are an audio type, the identifier of the screen on which the user focus is located changes. For example, when a video application a runs on the first screen, a video application b runs on the second screen, and application types of the video application a and the video application b each are an audio type, if the identifier of the screen on which the user focus is located changes from an identifier of the first screen to an identifier of the second screen, it may indicate that the user currently pays more attention to content displayed on the second screen. The terminal device may switch the enabled sound configuration parameter group, so that a current application scenario can be better matched by using the newly enabled sound configuration parameter group. For example, before the terminal device switches the enabled sound configuration parameter group, the terminal device may enable the stereo sound field to be located in a center of the first screen by using the enabled sound configuration parameter group. After the terminal device switches the enabled sound configuration parameter group, the terminal device may enable the stereo sound field to be located in a center of the second screen by using the newly enabled sound configuration parameter group. This manner can flexibly adjust a sound effect, and improve intelligence and flexibility of the terminal device.

In an implementation, when the terminal device determines that the screen on which the user focus is located is the second screen, the terminal device may output (for example, play) sound data of an application (that is, the video application b) running on the second screen, and enable the sound field generated when the terminal device outputs the sound data in stereo to be located in the center of the second screen. In addition, the terminal device may stop running an application (that is, the video application a) running on the first screen, or output sound data of the video application a in a manner different from a manner of outputting the sound data of the video application b. For example, when the terminal device outputs the sound data of the video application b in a speaker form, the terminal device may output the sound data of the video application a in a muted manner, or output the sound data of the video application a by using a headset. This manner can avoid mutual interference between sound data of two video applications.

In this embodiment of this application, the terminal device may set a plurality of types of screen display parameters, for example, the screen mode, the play mode of the audio type application running on the terminal device, the folding angle between the first screen and the second screen, the first application identifier corresponding to the content displayed on the first screen, the second application identifier corresponding to the content displayed on the second screen, or the identifier of the screen on which the user focus is located. When detecting that the screen mode of the terminal device changes, the terminal device may use a current screen mode as the current screen display parameter. When detecting that the folding angle between the first screen and the second screen changes, the terminal device may use a current folding angle as the current screen display parameter. When detecting that the application type corresponding to the first application identifier changes, the terminal device may use a current first application identifier as the current screen display parameter. When the first application identifier is different from the second application identifier, and the application types corresponding to the first application identifier and the second application identifier each are an audio type, and when the terminal device detects that the identifier of the screen on which the user focus is located changes, the terminal device may use an identifier of a screen on which a current user focus is located as the current screen display parameter.

In this embodiment of this application, that the screen display parameter meets the sound adjustment condition may include one or more of the foregoing cases. When it is detected that the screen display parameter meets the sound adjustment condition, the sound configuration parameter group enabled by the terminal device is switched. This can flexibly adjust a sound effect, better match different application scenarios, and improve intelligence and flexibility of the terminal device.

It should be noted that, for another execution process of step S301, refer to the specific descriptions of step S201 in FIG. 2. Details are not described herein again.

Step S302: The terminal device uses a sound configuration parameter group corresponding to the current folding angle in the plurality of sound configuration parameter groups as a first sound configuration parameter group based on a correspondence between a folding angle and a sound configuration parameter group.

Specifically, after obtaining the current screen display parameter (for example, the current folding angle), the terminal device may determine the first sound configuration parameter group from the plurality of sound configuration parameter groups based on the current screen display parameter. A specific implementation in which the terminal device determines the first sound configuration parameter group from the plurality of sound configuration parameter groups based on the current screen display parameter may be: using the sound configuration parameter group corresponding to the current folding angle in the plurality of sound configuration parameter groups as the first sound configuration parameter group based on the correspondence between a folding angle and a sound configuration parameter group. In this manner, as the folding angle changes, the sound configuration parameter group may be dynamically adapted, and the sound configuration parameter group enabled by the terminal device may be switched. This manner can flexibly adjust a sound effect, improve intelligence and flexibility of the terminal device, and help the user obtain better audio experience. In an implementation, one sound configuration parameter group may correspond to one or more angles.

Step S303: The terminal device updates a second sound configuration parameter group to the first sound configuration parameter group, where the second sound configuration parameter group is a sound configuration parameter group currently enabled by the terminal device.

It should be noted that, for a process of performing step S302 and step S303, refer to the specific descriptions of step S202 and step S203 in FIG. 2. Details are not described herein again.

In this embodiment of this application, when it is detected that the folding angle between the first screen and the second screen changes, the sound configuration parameter group enabled by the terminal device is switched. This can flexibly adjust a sound effect, and improve intelligence and flexibility of the terminal device.

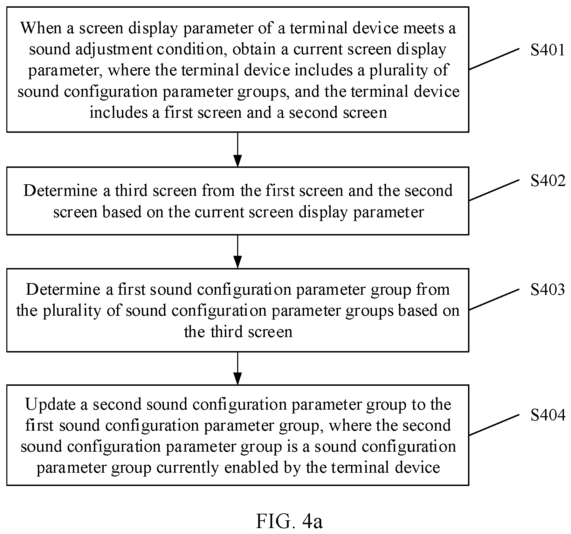

FIG. 4a is a schematic flowchart of still another sound processing method according to an embodiment of this application. The method is applied to a terminal device including a plurality of sound configuration parameter groups. A manner of determining, when the terminal device includes a first screen and a second screen, a third screen from the first screen and the second screen based on a current screen display parameter and a manner of determining a first sound configuration parameter group from the plurality of sound configuration parameter groups included in the terminal device based on the third screen are described in detail in the method. The sound processing method is executed by the terminal device or a chip in the terminal device. An example in which the sound processing method is executed by the terminal device is used below for description. As shown in FIG. 4a, the method may include but is not limited to the following steps.

Step S401: When a screen display parameter of the terminal device meets a sound adjustment condition, the terminal device obtains the current screen display parameter, where the terminal device includes the first screen and the second screen.

The screen display parameter may include but is not limited to one or more of a folding angle between the first screen and the second screen, a first application identifier corresponding to content displayed on the first screen, a second application identifier corresponding to content displayed on the second screen, or an identifier of a screen on which a user focus is located.

That the screen display parameter meets the sound adjustment condition includes one or more of the following cases: The folding angle changes; an application type corresponding to the first application identifier changes, and/or an application type corresponding to the second application identifier changes; and when the first application identifier is different from the second application identifier, and the application types corresponding to the first application identifier and the second application identifier each are an audio type, the identifier of the screen on which the user focus is located changes.

It should be noted that, for a process of performing step S401, refer to the specific descriptions of step S301 in FIG. 3a. Details are not described herein again.

Step S402: The terminal device determines the third screen from the first screen and the second screen based on the current screen display parameter.

Specifically, a specific implementation in which the terminal device determines the first sound configuration parameter group from the plurality of sound configuration parameter groups based on the current screen display parameter may be: determining the third screen from the first screen and the second screen based on the current screen display parameter; and determining the first sound configuration parameter group from the plurality of sound configuration parameter groups based on the third screen.

The third screen may be a screen that is in a working mode in the terminal device, or may be a screen on which an audio type application runs, or may be a screen to which a user pays more attention. The third screen may include either or both of the first screen and the second screen. After the third screen is determined, the first sound configuration parameter group may be determined based on the third screen. After the terminal device enables the first sound configuration parameter group, a sound effect of the terminal device may match the third screen. That the sound effect of the terminal device matches the third screen may indicate that a sound field generated when sound is played in stereo is located in a center of the third screen.

In an implementation, the current screen display parameter may include but is not limited to one or more of a current first application identifier, a current second application identifier, or an identifier of a screen on which a current user focus is located. The current first application identifier is an identifier of an application that runs on the first screen when it is detected that the screen display parameter of the terminal meets the sound adjustment condition. The current second application identifier is an identifier of an application that runs on the second screen when it is detected that the screen display parameter of the terminal meets the sound adjustment condition.

A specific implementation in which the terminal device determines the third screen from the first screen and the second screen based on the current screen display parameter may be: if the current first application identifier is an application identifier a, and the current second application identifier is none (in other words, the second screen displays no content), using the first screen as the third screen. In this case, the third screen is a screen that is in a working mode in the terminal device.

In an implementation, a specific implementation in which the terminal device determines the third screen from the first screen and the second screen based on the current screen display parameter may be: if the current first application identifier is the application identifier a, the current second application identifier is an application identifier b, and an application indicated by the application identifier a is in an active state, using the first screen as the third screen. There is one application in an active state in the terminal device, and the application in an active state may be an application currently used by the user or an application recently used by the user. In this case, the third screen is a screen on which an application in an active state runs.

In an implementation, a specific implementation in which the terminal device determines the third screen from the first screen and the second screen based on the current screen display parameter may be: if an application type corresponding to the current first application identifier is the audio type, and an application type corresponding to the current second application identifier is the non-audio type, using the first screen as the third screen. In other words, the terminal device may use a screen on which an audio type application runs as the third screen. In this case, the third screen is a screen on which an audio type application runs.

In an implementation, a specific implementation in which the terminal device determines the third screen from the first screen and the second screen based on the current screen display parameter may be: if the application types corresponding to the current first application identifier and the current second application identifier each are an audio type, and the current first application identifier is the same as the current second application identifier, using the first screen and the second screen as the third screen. When the application types corresponding to the current first application identifier and the current second application identifier each are an audio type, and the current first application identifier is the same as the current second application identifier, it may indicate that the terminal device is in a non-folded state, and outputs data of an application in a full-screen mode. For example, in FIG. 3d, the terminal device outputs video data of Tom and Jerry in a video application in a full-screen mode. In this case, the third screen is a screen on which an audio type application runs.

In an implementation, a specific implementation in which the terminal device determines the third screen from the first screen and the second screen based on the current screen display parameter may be: if the application types corresponding to the current first application identifier and the current second application identifier each are an audio type, and the current first application identifier is different from the current second application identifier, using a screen indicated by the identifier of the screen on which the current user focus is located as the third screen. The screen indicated by the identifier of the screen on which the current user focus is located is located is the first screen or the second screen. For example, when a video application a runs on the first screen, a video application b runs on the second screen, and an application type of the video application a and an application type of the video application b each are an audio type, if the identifier of the screen on which the user focus is located changes from an identifier of the first screen to an identifier of the second screen, the second screen may be used as the third screen. In this case, the third screen is a screen to which the user pays more attention.

Step S403: The terminal device determines a first sound configuration parameter group from the plurality of sound configuration parameter groups based on the third screen.

Specifically, the terminal device may use a sound configuration parameter group corresponding to the third screen as a first sound input/output device group based on a correspondence between a screen and a sound configuration parameter group. When the terminal device includes three sound configuration parameter groups, Table 3 may show the correspondence between a screen and a sound configuration parameter group. When the terminal device is configured by using a sound configuration parameter group 1, a sound field generated when the terminal device outputs sound in stereo is located in a center of the first screen. When the terminal device is configured by using a sound configuration parameter group 2, a sound field generated when the terminal device outputs sound in stereo is located in a center of the second screen. When the terminal device is configured by using a sound configuration parameter group 3, a sound field generated when the terminal device outputs sound in stereo is located in a center of a large screen formed by the first screen and the second screen.

**Table 3 Correspondence between a screen and a sound configuration parameter group**

| Screen | Sound configuration parameter group |
|---|---|
| First screen | Sound configuration parameter group 1 |
| Second screen | Sound configuration parameter group 2 |
| First screen + second screen | Sound configuration parameter group 3 |

In an implementation, the terminal device may include one or more sound input/output device groups, and the plurality of sound input/output device groups may be distributed on one or more screens. In an implementation, one or more sound input/output device groups may be configured on the first screen (or the second screen). In this embodiment of this application, an example in which one sound input/output device group is configured on each of the first screen and the second screen is used for description.

A sound configuration parameter group corresponding to each of the plurality of sound input/output device groups may include a single-screen sound configuration parameter group and a full-screen sound configuration parameter group. When a sound input/output device group is configured by using a corresponding single-screen sound configuration parameter group, a sound field generated when the terminal device outputs sound in stereo is located in a center of a screen on which the sound input/output device group is located. When a sound input/output device group is configured by using a corresponding full-screen sound configuration parameter group, a sound field generated when the terminal device outputs sound in stereo is located in the center of the large screen formed by the first screen and the second screen.

A specific implementation in which the terminal device determines the first sound configuration parameter group from the plurality of sound configuration parameter groups based on the third screen may be: using a sound input/output device group corresponding to the third screen as a first sound input/output device group based on a correspondence between a screen and a sound input/output device group; and if the third screen includes the first screen or the second screen, using a single-screen sound configuration parameter group corresponding to the first sound input/output device group as the first sound configuration parameter group; or if the third screen includes the first screen and the second screen, using a full-screen sound configuration parameter group corresponding to each first sound input/output device group as the first sound configuration parameter group.

In this embodiment of this application, there may be a correspondence between the first screen and a sound input/output device group configured on the first screen, and there may be a correspondence between the second screen and a sound input/output device group configured on the second screen. The sound input/output device group (that is, the first sound input/output device group) corresponding to the third screen may be a sound input/output device group enabled by the terminal device after it is detected that the screen display parameter meets the sound adjustment condition. When it is detected that the screen display parameter meets the sound adjustment condition, the sound input/output device group enabled by the terminal device may be a second sound input/output device group, in other words, the second sound input/output device group is a sound input/output device group currently enabled by the terminal device. After determining the first sound input/output device group, the terminal device may update the second sound input/output device group to the first sound input/output device group.

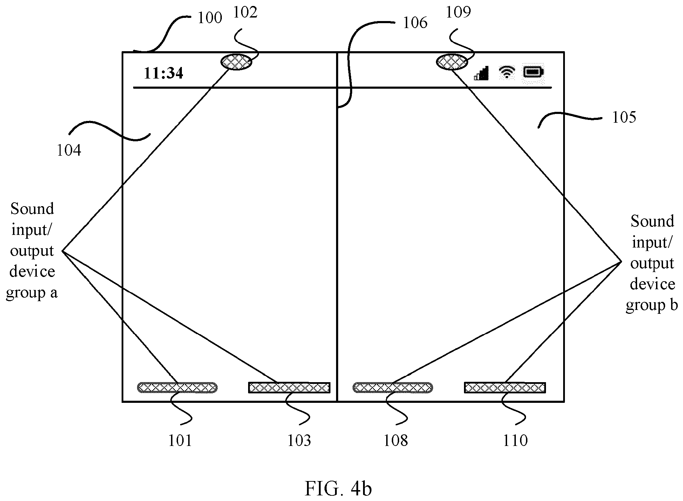

In this embodiment of this application, different sound input/output device groups may correspond to different sound configuration parameter groups. For example, FIG. 4b is a diagram of a correspondence between a screen and a sound input/output device group in a terminal device. In FIG. 4b, the terminal device 100 includes a first screen 104 and a second screen 105, and a folding angle between the first screen 104 and the second screen 105 may be changed by rotating a rotating shaft 106. The first screen 104 corresponds to a sound input/output device group a, and the sound input/output device group a includes a horn 101, an earpiece 102, and a microphone 103. The second screen 105 corresponds to a sound input/output device group b, and the sound input/output device group b includes a horn 108, an earpiece 109, and a microphone 110. When the sound input/output device group a corresponds to a single-screen sound configuration parameter group a, and the sound input/output device group b corresponds to a single-screen sound configuration parameter group b, the sound input/output device group a may be configured by using the single-screen sound configuration parameter group a, to enable a sound field generated when the terminal device outputs sound in stereo to be located in the center of the first screen; and the sound input/output device group b may be configured by using the single-screen sound configuration parameter group b, to enable a sound field generated when the terminal device outputs sound in stereo to be located in the center of the second screen.

In an implementation, the terminal device may alternatively configure the sound input/output device group b by using a single-screen sound configuration parameter group c, to enable a sound field generated when the terminal device outputs sound in stereo to be located in the center of the first screen 104. It can be learned from FIG. 4b that a distance between the center of the first screen 104 and the sound input/output device group b is greater than a distance between the center of the first screen 104 and the sound input/output device group a. Consequently, when the stereo sound field is located in the center of the first screen, resources consumed for configuring the sound input/output device group b by using the single-screen sound configuration parameter group c are more than resources for configuring the sound input/output device group a by using the single-screen sound configuration parameter group a. Therefore, the terminal device may enable the sound input/output device group a, in other words, use the sound input/output device group a as the first sound input/output device group, so as to determine the first sound configuration parameter group from sound configuration parameter groups corresponding to the first sound input/output device group.

When the third screen includes either of the first screen and the second screen, it may indicate that there is one screen in a working mode in the terminal device, or there is one screen on which an audio type application runs, or there is one screen to which the user pays more attention. In this case, a sound effect generated by configuring the terminal device by using a single-screen sound configuration parameter group can meet a user requirement. It may be understood that, when the terminal device outputs data of an application in a full-screen mode, the application has a relatively high sound function requirement. In this scenario, the terminal device may load a sound configuration parameter group that implements a relatively good sound effect. In this embodiment of this application, resources consumed by the terminal device to output sound data or collect sound data after the sound input/output device group is configured by using the single-screen sound configuration parameter group are less than resources consumed by the terminal device to output sound data or collect sound data after the same sound input/output device group is configured by using the full-screen sound configuration parameter group. Therefore, when the third screen includes either of the first screen and the second screen, the single-screen sound configuration parameter group corresponding to the first sound input/output device group is used as the first sound configuration parameter group. This reduces resource consumption of the terminal device while ensuring the sound effect of the terminal device.

When the third screen includes the first screen and the second screen, it may indicate that there are two screens in a working mode in the terminal device, or the first screen and the second screen jointly run one audio type application. In this case, the application running on the terminal device occupies a relatively large screen area, and it may be considered that the user currently pays more attention to data of the audio type application running on the first screen and the second screen. Therefore, the terminal device may enable all sound input/output device groups on the first screen and the second screen, and use a full-screen sound configuration parameter group corresponding to each of all the sound input/output device groups as the first sound configuration parameter group, so as to configure the sound input/output device group by using the full-screen sound configuration parameter group corresponding to each sound input/output device group. This manner can flexibly adjust a sound effect, optimize the sound effect of the terminal device, enhance immersion of the user, and improve intelligence and flexibility of the terminal device.

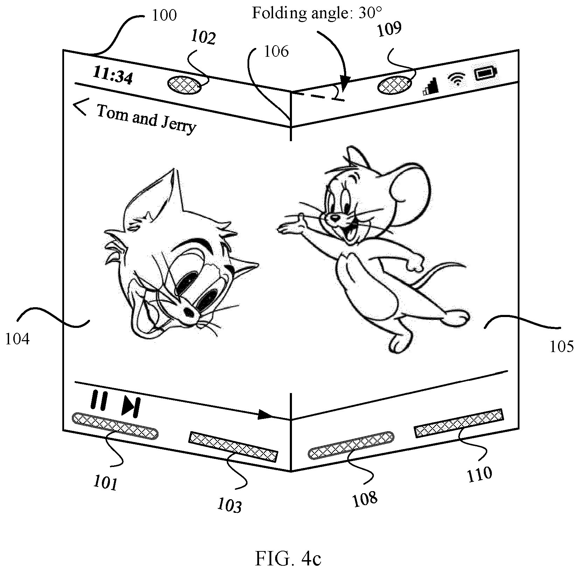

For example, FIG. 4c is a schematic diagram of usage of a sound input/output device group in a terminal device. In FIG. 4c, the terminal device 100 includes a first screen 104 and a second screen 105, a folding angle between the first screen 104 and the second screen 105 is 30°, and the folding angle may be changed by rotating a rotating shaft 106. The first screen 104 includes a sound input/output device group 1, and the sound input/output device group 1 includes a horn 101, an earpiece 102, and a microphone 103. The second screen 105 includes a sound input/output device group 2, and the sound input/output device group 2 includes a horn 108, an earpiece 109, and a microphone 110. If the determined third screen includes the first screen 104 and the second screen 105, the sound input/output device group 1 and the sound input/output device group 2 each may be determined as the first sound input/output device group, in other words, the terminal device may enable the sound input/output device group 1 and the sound input/output device group 2 to output sound data of a video Tom and Jerry. In FIG. 4c, when a sound input/output device group is filled with grids, it indicates that the sound input/output device group is enabled by the terminal device.

In an implementation, after the first sound input/output device group is determined, if the third screen includes the first screen and the second screen, and the folding angle between the first screen and the second screen is 0°, the terminal device may use a full-screen sound configuration parameter group corresponding to each first sound input/output device group as the first sound configuration parameter group.

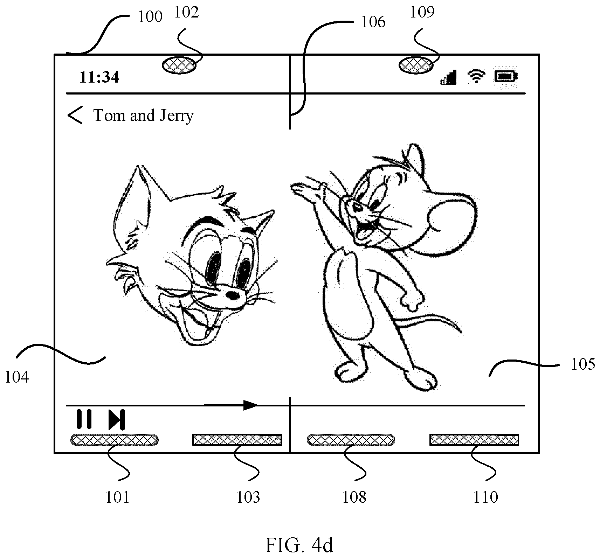

A schematic diagram of the terminal device obtained after the folding angle between the first screen and the second screen changes to 0° in FIG. 4c may be shown in FIG. 4d. In this embodiment of this application, a sound effect obtained after each sound input/output device group in the terminal device is configured by using a corresponding full-screen sound configuration parameter group when the folding angle between the first screen and the second screen is 0° is better than a sound effect obtained after each sound input/output device group in the terminal device is configured by using a corresponding full-screen sound configuration parameter group when the folding angle is an angle other than 0°. It can be learned from FIG. 4c and FIG. 4d that, when the horn 101 and the horn 108 in FIG. 4c and FIG. 4d are configured by using a same sound configuration parameter, and the earpiece 102 and the earpiece 109 in FIG. 4c and FIG. 4d are configured by using a same sound configuration parameter, an audio playback effect of the terminal device in FIG. 4d is better than that of the terminal device in FIG. 4c. In FIG. 4c, because the folding angle is 30°, if the user directly faces the first screen, the user may receive, to a maximum extent, sound played by the horn 101 and the earpiece 102 on the first screen, but cannot receive, to a maximum extent, sound played by the horn 108 and the earpiece 109 on the second screen. In FIG. 4d, because the folding angle is 0°, if the user directly faces the first screen, the user may receive, to a maximum extent, sound played by the horn 101 and the earpiece 102 on the first screen, and receive, to a maximum extent, sound played by the horn 108 and the earpiece 109 on the second screen. Therefore, when the folding angle between the first screen and the second screen is 0°, a sound input/output device group is configured by using a corresponding full-screen sound configuration parameter group. This improves the sound effect of the terminal device to a maximum extent.

It should be noted that, in this embodiment of this application, related sound output steps are similar to related sound collection steps, and the related sound collection steps may be determined based on the related sound output steps. Details are not described again in this embodiment of this application.

Step S404: The terminal device updates a second sound configuration parameter group to the first sound configuration parameter group, where the second sound configuration parameter group is a sound configuration parameter group currently enabled by the terminal device.

In this embodiment of this application, it is assumed that the first sound configuration parameter group includes a sound configuration parameter group 1 and a sound configuration parameter group 2, and the first sound input/output device group includes a sound input/output device group 1 and a first sound input/output device group 2. In addition, the sound configuration parameter group 1 is a single-screen sound configuration parameter group or a full-screen sound configuration parameter group corresponding to the sound input/output device group 1, and the sound configuration parameter group 2 is a single-screen sound configuration parameter group or a full-screen sound configuration parameter group corresponding to the sound input/output device group 2. In this case, the terminal device may invoke the sound configuration parameter group 1 to configure the sound input/output device group 1, and invoke the sound configuration parameter group 2 to configure the sound input/output device group 2.

It should be noted that, for a process of performing step S404, refer to the specific descriptions of step S303 in FIG. 3a. Details are not described herein again.

In this embodiment of this application, when it is detected that the screen display parameter of the terminal device meets the sound adjustment condition, the third screen may be determined from the first screen and the second screen based on the current screen display parameter, and the first sound configuration parameter group may be determined from the plurality of sound configuration parameter groups included in the terminal device based on the third screen. The third screen may be a screen that is in a working mode in the terminal device, or may be a screen on which an audio type application runs, or may be a screen to which the user pays more attention. In this manner, the sound effect of the terminal device can match the third screen.

The foregoing describes the methods of embodiments of this application in detail, and the following provides apparatuses of embodiments of this application.

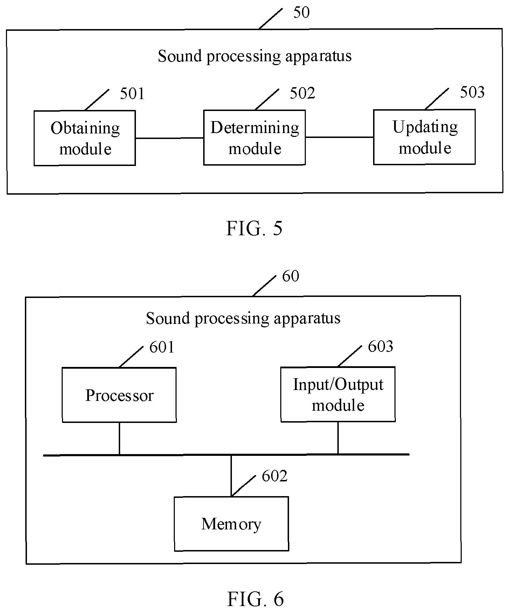

FIG. 5 is a schematic diagram of a structure of a sound processing apparatus according to an embodiment of this application. The sound processing apparatus 50 may be a terminal device or an apparatus (for example, a chip) having a function of the terminal device. The terminal device may include a plurality of sound configuration parameter groups. The sound processing apparatus 50 is configured to perform the steps performed by the terminal device in the method embodiments corresponding to FIG. 2 to FIG. 4a. The sound processing apparatus 50 may include:
an obtaining module 501, configured to: when a screen display parameter of the terminal device meets a sound adjustment condition, obtain a current screen display parameter;
a determining module 502, configured to determine a first sound configuration parameter group from the plurality of sound configuration parameter groups based on the current screen display parameter; and
an updating module 503, configured to update a second sound configuration parameter group to the first sound configuration parameter group, where the second sound configuration parameter group is a sound configuration parameter group currently enabled by the terminal device.

In an implementation, the terminal device may include a first screen and a second screen; and the screen display parameter may include one or more of a folding angle between the first screen and the second screen, a first application identifier corresponding to content displayed on the first screen, a second application identifier corresponding to content displayed on the second screen, or an identifier of a screen on which a user focus is located.

In an implementation, that the screen display parameter meets the sound adjustment condition may include one or more of the following cases: the folding angle changes; an application type corresponding to the first application identifier changes, and/or an application type corresponding to the second application identifier changes, where the application type may be an audio type or a non-audio type; and when the first application identifier is different from the second application identifier, and the application types corresponding to the first application identifier and the second application identifier each are an audio type, the identifier of the screen on which the user focus is located changes.

In an implementation, the current screen display parameter may include a current folding angle between the first screen and the second screen; and when determining the first sound configuration parameter group from the plurality of sound configuration parameter groups based on the current screen display parameter, the determining module 502 may be specifically configured to use a sound configuration parameter group corresponding to the current folding angle in the plurality of sound configuration parameter groups as the first sound configuration parameter group based on a correspondence between a folding angle and a sound configuration parameter group.

In an implementation, when determining the first sound configuration parameter group from the plurality of sound configuration parameter groups based on the current screen display parameter, the determining module 502 may be specifically configured to: determine a third screen from the first screen and the second screen based on the current screen display parameter; and determine the first sound configuration parameter group from the plurality of sound configuration parameter groups based on the third screen.

In an implementation, the current screen display parameter may include one or more of a current first application identifier, the current first application identifier, and an identifier of a screen on which a current user focus is located. When determining the third screen from the first screen and the second screen based on the current screen display parameter, the determining module 502 may be specifically configured to perform any one of the following steps: if an application type corresponding to the current first application identifier is the audio type and an application type corresponding to the current second application identifier is the non-audio type, using the first screen as the third screen; if the application types corresponding to the current first application identifier and the current second application identifier each are an audio type, and the current first application identifier is the same as the current second application identifier, using the first screen and the second screen as the third screen; and if the application types corresponding to the current first application identifier and the current second application identifier each are an audio type, and the current first application identifier is different from the current second application identifier, using a screen indicated by the identifier of the screen on which the current user focus is located as the third screen, where the screen indicated by the identifier of the screen on which the current user focus is located is the first screen or the second screen.

In an implementation, the terminal device may include a plurality of sound input/output device groups, and a sound configuration parameter group corresponding to each of the plurality of sound input/output device groups may include a single-screen sound configuration parameter group and a full-screen sound configuration parameter group. When determining the first sound configuration parameter group from the plurality of sound configuration parameter groups based on the third screen, the determining module 502 may be specifically configured to: use a sound input/output device group corresponding to the third screen as a first sound input/output device group based on a correspondence between a screen and a sound input/output device group; and if the third screen includes the first screen or the second screen, use a single-screen sound configuration parameter group corresponding to the first sound input/output device group as the first sound configuration parameter group; or if the third screen includes the first screen and the second screen, use a full-screen sound configuration parameter group corresponding to each first sound input/output device group as the first sound configuration parameter group.

In an implementation, the updating module 503 may be further configured to update a second sound input/output device group to the first sound input/output device group, where the second sound input/output device group is a sound input/output device group currently enabled by the terminal device.

It should be noted that, for content that is not described in the embodiment corresponding to FIG. 5 and specific implementations of steps performed by modules, refer to the foregoing embodiments shown in FIG. 2 to FIG. 4a and the foregoing content. Details are not described herein.

In an implementation, related functions implemented by the modules in FIG. 5 may be implemented in combination with a processor. FIG. 6 is a schematic diagram of a structure of a sound processing apparatus according to an embodiment of this application. The sound processing apparatus may be a terminal device or an apparatus (for example, a chip) having a function of the terminal device. The terminal device may include a plurality of sound configuration parameter groups. The sound processing apparatus 60 may include a processor 601, a memory 602, and an input/output module 603. The processor 601, the memory 602, and the input/output module 603 may be connected to each other through one or more communications buses, or may be connected to each other in another manner. The related functions implemented by the obtaining module 501, the determining module 502, and the updating module 503 shown in FIG. 5 may be implemented by one processor 601, or may be implemented by a plurality of different processors 601.

The processor 601 is configured to perform corresponding functions of the terminal device in the methods in FIG. 2 to FIG. 4a. The processor 601 may include one or more processors. For example, the processor 601 may be one or more central processing units (central processing unit, CPU), one or more network processors (network processor, NP), one or more hardware chips, or any combination thereof. When the processor 601 is one CPU, the CPU may be a single-core CPU or may be a multi-core CPU.

The memory 602 is configured to store program code and the like. The memory 602 may include a volatile memory (volatile memory), for example, a random access memory (random access memory, RAM). Alternatively, the memory 602 may include a nonvolatile memory (nonvolatile memory), for example, a read-only memory (read-only memory, ROM), a flash memory (flash memory), a hard disk drive (hard disk drive, HDD), or a solid-state drive (solid-state drive, SSD). Alternatively, the memory 602 may include a combination of the foregoing types of memories.

The input/output module 603 may be configured to output sound data or collect sound data. The input/output module 603 may include an input module and an output module. The input module may include one or more of the receiver, the microphone, or the camera in FIG. 1b. The output module may include one or more of the speaker, the handset jack, or the display in FIG. 1b.

The processor 601 may invoke the program code stored in the memory 602, to perform the following operations:
when a screen display parameter of the terminal device meets a sound adjustment condition, obtaining a current screen display parameter;
determining a first sound configuration parameter group from the plurality of sound configuration parameter groups based on the current screen display parameter; and
updating a second sound configuration parameter group to the first sound configuration parameter group, where the second sound configuration parameter group is a sound configuration parameter group currently enabled by the terminal device.

In an implementation, the terminal device may include a first screen and a second screen; and the screen display parameter may include one or more of a folding angle between the first screen and the second screen, a first application identifier corresponding to content displayed on the first screen, a second application identifier corresponding to content displayed on the second screen, or an identifier of a screen on which a user focus is located.

In an implementation, that the screen display parameter meets the sound adjustment condition may include one or more of the following cases: the folding angle changes; an application type corresponding to the first application identifier changes, and/or an application type corresponding to the second application identifier changes, where the application type may be an audio type or a non-audio type; and when the first application identifier is different from the second application identifier, and the application types corresponding to the first application identifier and the second application identifier each are an audio type, the identifier of the screen on which the user focus is located changes.

In an implementation, the current screen display parameter may include a current folding angle between the first screen and the second screen; and when determining the first sound configuration parameter group from the plurality of sound configuration parameter groups based on the current screen display parameter, the processor 601 may specifically perform the following operation: using a sound configuration parameter group corresponding to the current folding angle in the plurality of sound configuration parameter groups as the first sound configuration parameter group based on a correspondence between a folding angle and a sound configuration parameter group.

In an implementation, when determining the first sound configuration parameter group from the plurality of sound configuration parameter groups based on the current screen display parameter, the processor 601 may specifically perform the following operations: determining a third screen from the first screen and the second screen based on the current screen display parameter; and determining the first sound configuration parameter group from the plurality of sound configuration parameter groups based on the third screen.

In an implementation, the current screen display parameter may include one or more of a current first application identifier, a current second application identifier, and an identifier of a screen on which a current user focus is located. When determining the third screen from the first screen and the second screen based on the current screen display parameter, the processor 601 may specifically perform any one of the following steps: if an application type corresponding to the current first application identifier is the audio type and an application type corresponding to the current second application identifier is the non-audio type, using the first screen as the third screen; if the application types corresponding to the current first application identifier and the current second application identifier each are an audio type, and the current first application identifier is the same as the current second application identifier, using the first screen and the second screen as the third screen; and if the application types corresponding to the current first application identifier and the current second application identifier each are an audio type, and the current first application identifier is different from the current second application identifier, using a screen indicated by the identifier of the screen on which the current user focus is located as the third screen, where the screen indicated by the identifier of the screen on which the current user focus is located may be the first screen or the second screen.

In an implementation, the terminal device may include a plurality of sound input/output device groups, and a sound configuration parameter group corresponding to each of the plurality of sound input/output device groups may include a single-screen sound configuration parameter group and a full-screen sound configuration parameter group. When determining the first sound configuration parameter group from the plurality of sound configuration parameter groups based on the third screen, the processor 601 may specifically perform the following operations: using a sound input/output device group corresponding to the third screen as a first sound input/output device group based on a correspondence between a screen and a sound input/output device group; and if the third screen includes the first screen or the second screen, using a single-screen sound configuration parameter group corresponding to the first sound input/output device group as the first sound configuration parameter group; or if the third screen includes the first screen and the second screen, using a full-screen sound configuration parameter group corresponding to each first sound input/output device group as the first sound configuration parameter group.

In an implementation, the processor 601 may further perform the following operation: updating a second sound input/output device group to the first sound input/output device group, where the second sound input/output device group is a sound input/output device group currently enabled by the terminal device.

The processor 601 may further perform operations corresponding to the terminal device in the foregoing embodiments shown in FIG. 2 to FIG. 4a. For details, refer to the descriptions in the method embodiments. Details are not described herein again.

An embodiment of this application further provides a computer-readable storage medium. The computer-readable storage medium may be configured to store computer software instructions used by the sound processing apparatus in the embodiment shown in FIG. 5, and the computer software instructions include a program designed for the terminal device in the foregoing embodiment.

The computer-readable storage medium includes but is not limited to a flash memory, a hard disk, and a solid-state drive.

An embodiment of this application further provides a computer program product. When the computer product is run by a computing device, the methods designed for the terminal device in the foregoing embodiments in FIG. 2 to FIG. 4a may be performed.

An embodiment of this application further provides a chip. The chip includes a processor and a memory. The memory is configured to store a computer program. The processor is configured to invoke the computer program from the memory and run the computer program. The computer program is used to implement the methods in the foregoing method embodiments.

A person of ordinary skill in the art may be aware that, in combination with the examples described in embodiments disclosed in this application, units and algorithm steps may be implemented by electronic hardware or a combination of computer software and electronic hardware. Whether functions are performed by hardware or software depends on particular applications and design constraints of the technical solutions. A person skilled in the art may use a different method to implement the described functions for each particular application, but it should not be considered that the implementation goes beyond the scope of this application.

All or some of embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a special-purpose computer, a computer network, or another programmable apparatus. The computer instructions may be stored in a computer-readable storage medium or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

## Claims

1. A sound processing method, wherein the method is applied to a terminal device comprising a plurality of sound configuration parameter groups, and the method comprises:
when a screen display parameter of the terminal device meets a sound adjustment condition, obtaining (S201) a current screen display parameter;
determining (S202) a first sound configuration parameter group from the plurality of sound configuration parameter groups based on the current screen display parameter; and
updating (S203) a second sound configuration parameter group to the first sound configuration parameter group, wherein the second sound configuration parameter group is a sound configuration parameter group currently enabled by the terminal device,
wherein the terminal device comprises a first screen and a second screen; and the screen display parameter comprises one or more of a folding angle between the first screen and the second screen, a first application identifier corresponding to content displayed on the first screen, a second application identifier corresponding to content displayed on the second screen, or an identifier of a screen on which a user focus is located,
wherein that the screen display parameter meets the sound adjustment condition comprises:
when the first application identifier is different from the second application identifier, and the application types corresponding to the first application identifier and the second application identifier each are the audio type, the identifier of the screen on which the user focus is located changes.

2. The method according to claim 1, wherein the current screen display parameter comprises a current folding angle between the first screen and the second screen; and
the determining (S202) a first sound configuration parameter group from the plurality of sound configuration parameter groups based on the current screen display parameter comprises:
using (S302) a sound configuration parameter group corresponding to the current folding angle in the plurality of sound configuration parameter groups as the first sound configuration parameter group based on a correspondence between a folding angle and a sound configuration parameter group.

3. The method according to claim 1, wherein the determining (S202) a first sound configuration parameter group from the plurality of sound configuration parameter groups based on the current screen display parameter comprises:
determining a third screen from the first screen and the second screen based on the current screen display parameter; and
determining the first sound configuration parameter group from the plurality of sound configuration parameter groups based on the third screen.

4. The method according to claim 3, wherein the current screen display parameter comprises one or more of a current first application identifier, a current second application identifier, or an identifier of a screen on which a current user focus is located; and
the determining a third screen from the first screen and the second screen based on the current screen display parameter comprises any one of the following steps:
if an application type corresponding to the current first application identifier is the audio type and an application type corresponding to the current second application identifier is the non-audio type, using the first screen as the third screen;
if the application types corresponding to the current first application identifier and the current second application identifier each are the audio type, and the current first application identifier is the same as the current second application identifier, using the first screen and the second screen as the third screen; and
if the application types corresponding to the current first application identifier and the current second application identifier each are the audio type, and the current first application identifier is different from the current second application identifier, using a screen indicated by the identifier of the screen on which the current user focus is located as the third screen, wherein the screen indicated by the identifier of the screen on which the current user focus is located is the first screen or the second screen.

5. The method according to claim 3 or 4, wherein the terminal device comprises a plurality of sound input/output device groups, and a sound configuration parameter group corresponding to each of the plurality of sound input/output device groups comprises a single-screen sound configuration parameter group and a full-screen sound configuration parameter group; and
the determining (S202) the first sound configuration parameter group from the plurality of sound configuration parameter groups based on the third screen comprises:
using a sound input/output device group corresponding to the third screen as a first sound input/output device group based on a correspondence between a screen and a sound input/output device group; and
if the third screen comprises the first screen or the second screen, using a single-screen sound configuration parameter group corresponding to the first sound input/output device group as the first sound configuration parameter group; or
if the third screen comprises the first screen and the second screen, using a full-screen sound configuration parameter group corresponding to each first sound input/output device group as the first sound configuration parameter group.

6. The method according to claim 5, wherein the method further comprises:
updating (S303) a second sound input/output device group to the first sound input/output device group, wherein the second sound input/output device group is a sound input/output device group currently enabled by the terminal device.

7. A sound processing apparatus (50, 60), comprising a unit configured to perform the method according to any one of claims 1 to 6.

8. A computer-readable storage medium, wherein the computer-readable storage medium stores a computer program, the computer program comprises program instructions, and when the program instructions are executed by a processor, the processor is enabled to perform the method according to any one of claims 1 to 6.

## Patentansprüche

1. Tonverarbeitungsverfahren, wobei das Verfahren auf ein Endgerät, das eine Vielzahl von Tonkonfigurationsparametergruppen umfasst, angewandt wird und das Verfahren Folgendes umfasst:
wenn ein Bildschirmanzeigeparameter des Endgeräts eine Tonanpassungsbedingung erfüllt, Erlangen (S201) eines gegenwärtigen Bildschirmanzeigeparameters;
Bestimmen (S202) einer ersten Tonkonfigurationsparametergruppe aus der Vielzahl von Tonkonfigurationsparametergruppen basierend auf dem gegenwärtigen Bildschirmanzeigeparameter; und
Aktualisieren (S203) einer zweiten Tonkonfigurationsparametergruppe auf die erste Tonkonfigurationsparametergruppe, wobei die zweite Tonkonfigurationsparametergruppe eine gegenwärtig durch das Endgerät aktivierte Tonkonfigurationsparametergruppe ist,
wobei das Endgerät einen ersten Bildschirm und einen zweiten Bildschirm umfasst; und der Bildschirmanzeigeparameter eines oder mehrere eines Faltungswinkels zwischen dem ersten Bildschirm und dem zweiten Bildschirm, einer ersten Anwendungskennung korrespondierend mit auf dem ersten Bildschirm angezeigtem Inhalt, einer zweiten Anwendungskennung korrespondierend mit auf dem zweiten Bildschirm angezeigtem Inhalt oder einer Kennung eines Bildschirms, auf dem sich ein Benutzerfokus befindet, umfasst,
wobei, dass der Bildschirmanzeigeparameter die Tonanpassungsbedingung erfüllt, umfasst:
wenn die erste Anwendungskennung von der zweiten Anwendungskennung verschieden ist und die Anwendungstypen korrespondierend mit der ersten Anwendungskennung und der zweiten Anwendungskennung jeweils der Typ Audio sind, ändert sich die Kennung des Bildschirms, auf dem sich der Benutzerfokus befindet.

2. Verfahren nach Anspruch 1, wobei der gegenwärtige Bildschirmanzeigeparameter einen gegenwärtigen Faltungswinkel zwischen dem ersten Bildschirm und dem zweiten Bildschirm umfasst; und
das Bestimmen (S202) einer ersten Tonkonfigurationsparametergruppe aus der Vielzahl von Tonkonfigurationsparametergruppen basierend auf dem gegenwärtigen Bildschirmanzeigeparameter Folgendes umfasst:
Verwenden (S302) einer Tonkonfigurationsparametergruppe korrespondierend mit dem gegenwärtigen Faltungswinkel in der Vielzahl von Tonkonfigurationsparametergruppen als die erste Tonkonfigurationsparametergruppe basierend auf einer Korrespondenz zwischen einem Faltungswinkel und einer Tonkonfigurationsparametergruppe.

3. Verfahren nach Anspruch 1, wobei das Bestimmen (S202) einer ersten Tonkonfigurationsparametergruppe aus der Vielzahl von Tonkonfigurationsparametergruppen basierend auf dem gegenwärtigen Bildschirmanzeigeparameter Folgendes umfasst:
Bestimmen eines dritten Bildschirms aus dem ersten Bildschirm und dem zweiten Bildschirm basierend auf dem gegenwärtigen Bildschirmanzeigeparameter; und Bestimmen der ersten Tonkonfigurationsparametergruppe aus der Vielzahl von Tonkonfigurationsparametergruppen basierend auf dem dritten Bildschirm.

4. Verfahren nach Anspruch 3, wobei der gegenwärtige Bildschirmanzeigeparameter eines oder mehrere einer gegenwärtigen ersten Anwendungskennung, einer gegenwärtigen zweiten Anwendungskennung oder einer Kennung eines Bildschirms, auf dem sich ein gegenwärtiger Benutzerfokus befindet, umfasst; und
das Bestimmen eines dritten Bildschirms aus dem ersten Bildschirm und dem zweiten Bildschirm basierend auf dem gegenwärtigen Bildschirmanzeigeparameter einen beliebigen der folgenden Schritte umfasst:
falls ein Anwendungstyp korrespondierend mit der gegenwärtigen ersten Anwendungskennung der Typ Audio ist und ein Anwendungstyp korrespondierend mit der gegenwärtigen zweiten Anwendungskennung der Typ Nicht-Audio ist, Verwenden des ersten Bildschirms als den dritten Bildschirm;
falls die Anwendungstypen korrespondierend mit der gegenwärtigen ersten Anwendungskennung und der gegenwärtigen zweiten Anwendungskennung jeweils der Typ Audio sind und die gegenwärtige erste Anwendungskennung die gleiche wie die gegenwärtige zweite Anwendungskennung ist, Verwenden des ersten Bildschirms und des zweiten Bildschirms als den dritten Bildschirm; und
falls die Anwendungstypen korrespondierend mit der gegenwärtigen ersten Anwendungskennung und der gegenwärtigen zweiten Anwendungskennung jeweils der Typ Audio sind und die gegenwärtige erste Anwendungskennung von der gegenwärtigen zweiten Anwendungskennung verschieden ist, Verwenden eines Bildschirms, der durch die Kennung des Bildschirms, auf dem sich der gegenwärtige Benutzerfokus befindet, angegeben wird, als den dritten Bildschirm, wobei der Bildschirm, der durch die Kennung des Bildschirms, auf dem sich der gegenwärtige Benutzerfokus befindet, angegeben wird, der erste Bildschirm oder der zweite Bildschirm ist.

5. Verfahren nach Anspruch 3 oder 4, wobei das Endgerät eine Vielzahl von Tonein-/-ausgabegerätegruppen umfasst und eine Tonkonfigurationsparametergruppe korrespondierend mit jeder der Vielzahl von Tonein-/-ausgabegerätegruppen eine Einzelbildschirm-Tonkonfigurationsparametergruppe und eine Vollbildschirm-Tonkonfigurationsparametergruppe umfasst; und
das Bestimmen (S202) der ersten Tonkonfigurationsparametergruppe aus der Vielzahl von Tonkonfigurationsparametergruppen basierend auf dem dritten Bildschirm Folgendes umfasst:
Verwenden einer Tonein-/-ausgabegerätegruppe korrespondierend mit dem dritten Bildschirm als eine erste Tonein-/-ausgabegerätegruppe basierend auf einer Korrespondenz zwischen einem Bildschirm und einer Tonein-/-ausgabegerätegruppe; und
falls der dritte Bildschirm den ersten Bildschirm oder den zweiten Bildschirm umfasst, Verwenden einer Einzelbildschirm-Tonkonfigurationsparametergruppe korrespondierend mit der ersten Tonein-/-ausgabegerätegruppe als die erste Tonkonfigurationsparametergruppe; oder
falls der dritte Bildschirm den ersten Bildschirm und den zweiten Bildschirm umfasst, Verwenden einer Vollbildschirm-Tonkonfigurationsparametergruppe korrespondierend mit jeder ersten Tonein-/-ausgabegerätegruppe als die erste Tonkonfigurationsparametergruppe.

6. Verfahren nach Anspruch 5, wobei das Verfahren ferner Folgendes umfasst:
Aktualisieren (S303) einer zweiten Tonein-/-ausgabegerätegruppe auf die erste Tonein-/-ausgabegerätegruppe, wobei die zweite Tonein-/-ausgabegerätegruppe eine gegenwärtig durch das Endgerät aktivierte Tonein-/-ausgabegerätegruppe ist.

7. Tonverarbeitungsvorrichtung (50, 60), umfassend eine Einheit, die zum Durchführen des Verfahrens nach einem der Ansprüche 1 bis 6 konfiguriert ist.

8. Computerlesbares Speichermedium, wobei das computerlesbare Speichermedium ein Computerprogramm speichert, das Computerprogramm Programmanweisungen umfasst und, wenn die Programmanweisungen durch einen Prozessor ausgeführt werden, der Prozessor in die Lage versetzt wird, das Verfahren nach einem der Ansprüche 1 bis 6 durchzuführen.

## Revendications

1. Procédé de traitement de son, dans lequel le procédé est appliqué à un dispositif terminal comprenant une pluralité de groupes de paramètres de configuration de son, et le procédé comprend :
lorsqu'un paramètre d'affichage d'écran du dispositif terminal satisfait une condition de réglage de son, l'obtention (S201) d'un paramètre d'affichage d'écran actuel ;
la détermination (S202) d'un premier groupe de paramètres de configuration de son à partir de la pluralité de groupes de paramètres de configuration de son sur la base du paramètre d'affichage d'écran actuel ; et
la mise à jour (S203) d'un second groupe de paramètres de configuration de son sur le premier groupe de paramètres de configuration de son, dans lequel le second groupe de paramètres de configuration de son est un groupe de paramètres de configuration de son activé actuellement par le dispositif terminal,
dans lequel le dispositif terminal comprend un premier écran et un deuxième écran ; et le paramètre d'affichage d'écran comprend un ou plusieurs éléments parmi un angle de pliage entre le premier écran et le deuxième écran, un premier identifiant d'application correspondant au contenu affiché sur le premier écran, un second identifiant d'application correspondant à un contenu affiché sur le deuxième écran ou un identifiant d'un écran sur lequel une focalisation sur l'utilisateur est située,
dans lequel le fait que le paramètre d'affichage d'écran satisfait la condition de réglage de son comprend :
lorsque le premier identifiant d'application est différent du second identifiant d'application, et que les types d'application correspondant au premier identifiant d'application et au second identifiant d'application sont chacun du type audio, l'identifiant de l'écran sur lequel la focalisation sur l'utilisateur est située change.

2. Procédé selon la revendication 1, dans lequel le paramètre d'affichage d'écran actuel comprend un angle de pliage actuel entre le premier écran et le deuxième écran ; et
la détermination (S202) d'un premier groupe de paramètres de configuration de son à partir de la pluralité de groupes de paramètres de configuration de son sur la base du paramètre d'affichage d'écran actuel comprend :
l'utilisation (S302) d'un groupe de paramètres de configuration de son correspondant à l'angle de pliage actuel dans la pluralité de groupes de paramètres de configuration de son en tant que premier groupe de paramètres de configuration de son sur la base d'une correspondance entre un angle de pliage et un groupe de paramètres de configuration de son.

3. Procédé selon la revendication 1, dans lequel la détermination (S202) d'un premier groupe de paramètres de configuration de son à partir de la pluralité de groupes de paramètres de configuration de son sur la base du paramètre d'affichage d'écran actuel comprend :
la détermination d'un troisième écran à partir du premier écran et du deuxième écran sur la base du paramètre d'affichage d'écran actuel ; et
la détermination du premier groupe de paramètres de configuration de son à partir de la pluralité de groupes de paramètres de configuration de son sur la base du troisième écran.

4. Procédé selon la revendication 3, dans lequel le paramètre d'affichage d'écran actuel comprend un ou plusieurs éléments parmi un premier identifiant d'application actuel, un second identifiant d'application actuel ou un identifiant d'un écran sur lequel une focalisation sur l'utilisateur actuel est située ; et
la détermination d'un troisième écran à partir du premier écran et du deuxième écran sur la base du paramètre d'affichage d'écran actuel comprend l'une quelconque des étapes suivantes :
si un type d'application correspondant au premier identifiant d'application actuel est du type audio et qu'un type d'application correspondant au second identifiant d'application actuel est du type non audio, utiliser le premier écran en tant que troisième écran ;
si les types d'application correspondant au premier identifiant d'application actuel et au second identifiant d'application actuel sont chacun du type audio, et que le premier identifiant d'application actuel est le même que le second identifiant d'application actuel, utiliser le premier écran et le deuxième écran en tant que troisième écran ; et
si les types d'application correspondant au premier identifiant d'application actuel et au second identifiant d'application actuel sont chacun du type audio, et que le premier identifiant d'application actuel est différent du second identifiant d'application actuel, utiliser un écran indiqué par l'identifiant de l'écran sur lequel la focalisation sur l'utilisateur actuel est située en tant que troisième écran, dans lequel l'écran indiqué par l'identifiant de l'écran sur lequel la focalisation sur l'utilisateur actuel est située est le premier écran ou le deuxième écran.

5. Procédé selon la revendication 3 ou 4, dans lequel le dispositif terminal comprend une pluralité de groupes de dispositifs d'entrée/sortie de son, et un groupe de paramètres de configuration de son correspondant à chacun de la pluralité de groupes de dispositifs d'entrée/sortie de son comprend un groupe de paramètres de configuration de son à écran unique et un groupe de paramètres de configuration de son de plein écran ; et
la détermination (S202) du premier groupe de paramètres de configuration de son à partir de la pluralité de groupes de paramètres de configuration de son sur la base du troisième écran comprend :
l'utilisation d'un groupe de dispositifs d'entrée/sortie de son correspondant au troisième écran en tant que premier groupe de dispositifs d'entrée/sortie de son sur la base d'une correspondance entre un écran et un groupe de dispositifs d'entrée/sortie de son ; et
si le troisième écran comprend le premier écran ou le deuxième écran, utiliser un groupe de paramètres de configuration de son à écran unique correspondant au premier groupe de dispositifs d'entrée/sortie de son en tant que premier groupe de paramètres de configuration de son ; ou
si le troisième écran comprend le premier écran et le deuxième écran, utiliser un groupe de paramètres de configuration de son de plein écran correspondant à chaque premier groupe de dispositifs d'entrée/sortie de son en tant que premier groupe de paramètres de configuration de son.

6. Procédé selon la revendication 5, dans lequel le procédé comprend en outre :
la mise à jour (S303) d'un second groupe de dispositifs d'entrée/sortie de son sur le premier groupe de dispositifs d'entrée/sortie de son, dans lequel le second groupe de dispositifs d'entrée/sortie de son est un groupe de dispositifs d'entrée/sortie de son activé actuellement par le dispositif terminal.

7. Appareil de traitement de son (50, 60) comprenant une unité conçue pour exécuter le procédé selon l'une quelconque des revendications 1 à 6.

8. Support de stockage lisible par ordinateur, dans lequel le support de stockage lisible par ordinateur stocke un programme informatique, le programme informatique comprend des instructions de programme, et lorsque les instructions de programme sont exécutées par un processeur, le processeur est activé pour exécuter le procédé selon l'une quelconque des revendications 1 à 6.
